(19) Europäisches Patentamt
European Patent Office
Office européen des brevets

(11) EP 3 243 091 B1

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(21) Anmeldenummer: **15784019.0**

(22) Anmeldetag: **19.10.2015**

(51) Int Cl.:
***G02B 1/115*** *(2015.01)* ***G02B 27/00*** *(2006.01)*

(86) Internationale Anmeldenummer:
**PCT/EP2015/074173**

(87) Internationale Veröffentlichungsnummer:
**WO 2016/110339 (14.07.2016 Gazette 2016/28)**

# (54) VERFAHREN ZUR HERSTELLUNG EINES OPTISCHEN ELEMENTS MIT EINEM SCHICHTSYSTEM

METHOD OF MANUFACTURING AN OPTICAL ELEMENT COMPRISING A LAYER SYSTEM

PROCÉDÉ DE FABRICATION D'UN ÉLÉMENT OPTIQUE MUNI D'UN SYSTÈME DE COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2015 DE 102015100091**

(43) Veröffentlichungstag der Anmeldung:
**15.11.2017 Patentblatt 2017/46**

(60) Teilanmeldung:
**19215119.9 / 3 657 222**

(73) Patentinhaber: **Rodenstock GmbH**
**80687 München (DE)**

(72) Erfinder:
- **SCHERSCHLICHT, Rüdiger**
  **82008 Unterhaching (DE)**
- **VÖGT, Michael**
  **82205 Gilching (DE)**

(74) Vertreter: **Kaufmann, Ursula Josefine**
**RPK Patentanwälte**
**Reinhardt, Pohlmann und Kaufmann**
**Partnerschaft mbB**
**Gaisburgstrasse 21**
**70182 Stuttgart (DE)**

(56) Entgegenhaltungen:
**EP-A1- 0 855 604**
**WO-A1-2013/171435**
**WO-A2-2008/000841**
**DE-A1- 10 101 017**
**US-A1- 2008 261 008**
**US-A1- 2013 271 836**
**US-B1- 6 590 702**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 243 091 B1

## Beschreibung

### Stand der Technik

Die Erfindung betrifft ein Verfahren zur Herstellung eines optischen Elements mit einem Schichtsystem, insbesondere zur Beschichtung von Brillengläsern.

Es ist bekannt, zur Beeinflussung der optischen Eigenschaften optischer Elemente, wie beispielsweise Brillengläsern, Beschichtungen der optischen Elemente einzusetzen. Dabei wird für jede Form von optischer Beschichtung, wie beispielsweise Entspiegelung, Verspiegelung, Filterwirkung, eine auf diese spezielle Anwendung oder Anforderung abgestimmte Schichtabfolge eingesetzt. Diese Schichtdesigns sind üblicherweise unterschiedlich in Schichtabfolge, verwendeten Materialien, Prozessführung und möglicherweise im Beschichtungsverfahren.

Die WO 2013/171435 A1 offenbart ein Brillenglas mit einer Vorderseiten- und einer Rückseitenbeschichtung. Die Vorderseite des Brillenglases trägt dabei eine Beschichtung zum Abschneiden des UV-Anteils von Lichtstrahlen, die auf die Vorderseite fallen. Die Rückseite des Brillenglases trägt eine Anti-Reflex-Beschichtung, welche im UV-Bereich einen gewichteten Reflexionsfaktor von kleiner oder gleich 7% aufweist. Weiter weist das Brillenglas eine Beschichtung zur Filterung des Blauanteils von Licht im Wellenlängenbereich von 400 bis 460 nm auf.

Die DE 101 01 017 A1 offenbart ein optisches Schichtsystem mit einem verringerten Reflexionsgrad im Ultravioletten im Wellenlängenbereich zwischen 180 nm und 370 nm. Das Schichtsystem besteht aus Schichtpaketen bestehend aus jeweils benachbarten niedrig- und hochbrechenden Schichten. Die substratnächste Schicht darf nicht aus Magnesiumfluorid bestehen, und keine der Schichten weist eine Schichtdicke von mehr als der Hälfte der Arbeitswellenlänge im ultravioletten Bereich auf.

### Offenbarung der Erfindung

Die Aufgabe der Erfindung ist es, ein Verfahren zur Auslegung und Herstellung eines optischen Elements zu schaffen, dessen optischen Eigenschaften mit möglichst einfachen und für unterschiedliche Anforderungen einheitlichen Beschichtungsverfahren beeinflusst werden kann.

Die Aufgabe wird durch die Merkmale der unabhängigen Ansprüche gelöst. Günstige Ausgestaltungen und Vorteile der Erfindung ergeben sich aus den weiteren Ansprüchen, der Beschreibung und den Zeichnungen.

Mit dem im weiteren beschriebenen erfindungsgemäßen Verfahren wird ein optisches Element, insbesondere eine ophthalmische Linse bzw. ein Brillenglas, hergestellt, umfassend wenigstens ein auf einer Oberfläche eines Substrats angeordneten Schichtsystem, mit einem Stapel von aufeinander folgenden Schichtpaketen, wobei jedes Schichtpaket eine erste Teilschicht mit einer ersten optischen Dicke t1 und eine zweite Teilschicht mit einer zweiten, von der ersten optischen Dicke t1 verschiedenen optischen Dicke t2 umfasst. Dabei sind optische Eigenschaften des Schichtpakets abhängig von einem Parameter $\sigma$ vorgebbar. Das Schichtpaket weist somit optische Eigenschaften auf, die abhängig von dem Parameter vorgegeben sind. Die jeweiligen Schichtpakete sind abhängig von einem Quotienten $v_i$ der optischen Dicke t1 jeweils einer höherbrechenden Teilschicht und einer optischen Dicke t2 einer niedrigerbrechenden Teilschicht des Schichtpakets gebildet, wobei der Index i die Reihenfolge der aufeinander folgenden Schichtpakete im Stapel bezeichnet, wobei die höherbrechende Teilschicht insbesondere eine hochbrechende Teilschicht umfasst und die niedrigerbrechende Teilschicht insbesondere eine niedrigbrechende Teilschicht umfasst. Der Parameter $\sigma$ ist dabei eine Funktion eines Verhältnisses von Quotienten $v_i$ der optischen Dicke jeweils der höherbrechenden Teilschicht und der optischen Dicke der niedrigerbrechenden Teilschicht.

Eine Reflektivität Rm des Stapels von Schichtpaketen ist vorgebbar, wobei das Produkt aus einer über den sichtbaren Bereich des Lichts von 380 nm bis 800 nm gemittelten Reflektivität Rm in Prozent und dem Parameter $\sigma$ kleiner als 1 ist bei einer Entspiegelung bzw. entspiegelnden Wirkung und/oder antireflektierenden Wirkung des Stapels von Schichtpaketen, oder größer oder gleich 1 ist für eine innerhalb des sichtbaren Bereich des Lichts von 380 nm bis 800 nm auftretende Verspiegelung bzw. verspiegelnde Wirkung des Stapels. Der Index i = 1 bis nmax der Quotienten $v_i$ bezeichnet dabei die Reihenfolge der aufeinander folgenden bzw. aufeinander angeordneten Schichtpakete bei einer maximalen Zahl von nmax Schichtpaketen. Im auf einem Substrat eines optischen Elements angebrachten Zustand ist der Index i umso kleiner, je näher das jeweilige Schichtpaket am Substrat angeordnet ist. D.h. beispielsweise der Quotient $v_5$ ist bei einem Stapel aus fünf Schichtpaketen im an einem optischen Element angebrachten Zustand dem am weitesten vom Substrat entfernt angeordneten Schichtpaket zugeordnet.

Bei der Applikation des Schichtsystems beispielsweise auf einem Brillenglas würde das Schichtpaket mit dem Index nmax das der Luft am nächsten angeordnete sein.

Das gesamte Schichtsystem kann auf ein optisch transparentes Substrat direkt oder auch auf ein Hartschicht-beschichtetes Substrat aufgebracht werden. Vor dem Aufbringen des Schichtsystems können die beschriebenen Oberflächen mittels Plasma konditioniert werden. Dem Plasma können verschiedene Gase, wie Ar, $O_2$, $N_2$, und dergleichen zugesetzt werden. Die Konditionierung kann eine Aktivierung, aber auch eine Funktionalisierung der zu beschichtenden Oberfläche, wie Verdichtung darstellen.

Die beschriebene Plasmakonditionierung kann auch auf die äußerste, vom Substrat am weitesten entfernte Teilschicht angewandt werden.

Insbesondere betrifft die Erfindung die Beschichtung von Brillengläsern zur Beeinflussung der optischen Eigenschaften der Brillengläser auf unterschiedliche Weise, wie beispielsweise als Antireflex - Beschichtung bzw. Entspiegelung, beispielsweise als Filter für den Blauanteil des sichtbaren Lichts (Blaublock), oder als Verspiegelung.

Erfindungsgemäß wird dies erreicht durch eine Abfolge von aufeinander folgenden Schichtpaketen, wobei jedes Schichtpaket mindestens eine niedrigerbrechende und eine höherbrechende Teilschicht, insbesondere eine niedrigbrechende und eine hochbrechende Teilschicht aufweist. Durch Variation der Schichtpaketdicken bei gleichbleibenden Materialien lassen sich unterschiedliche Effekte/Reflektivitäten, insbesondere für Entspiegelung und/oder antireflektierende Wirkung und Verspiegelung erzielen. Dies wird erreicht durch Minimierung/Optimierung eines Parameters $\sigma$. $\sigma$ ist wiederum eine Funktion der Schichtdicken, bzw. von Verhältnissen der optischen Dicken der Teilschichten eines jeden Schichtpakets.

Die Reflektivität Rm, auch Reflexionsgrad genannt, beschreibt hierbei das Verhältnis von reflektierter zu einfallender Intensität eines Lichtstrahls als Energiegröße.

Erfindungsgemäß kann eine Entspiegelung bzw. entspiegelnde Wirkung und/oder anti-reflektierende Wirkung durch den Stapel von Schichtpaketen für eine vorgebbare Reflektivität Rm des Stapels von Schichtpaketen erreicht werden, wenn das Produkt aus Reflektivität Rm und dem Parameter $\sigma$ kleiner als 1 eingestellt ist.

Die Reflektivität Rm lässt sich dabei durch die oben angegebene Beziehung als Verhältnis der reflektierten Intensität zur einfallenden Intensität der einfallenden Lichtstrahls bestimmen, wobei die Reflektivität Rm zweckmäßigerweise über den sichtbaren Bereich des Lichts von 380 nm bis 800 nm gemittelt wird und auf 100 % bezogen bzw. in Prozent angegeben ist. Eine solche Bedingung kann für einen Optimierungsprozess des Verfahrens zur Herstellung des Schichtsystems als Randbedingung angesetzt werden.

Weiter kann eine Verspiegelung für eine vorgebbare Reflektivität Rm des Stapels von Schichtpaketen erreicht werden, wenn das Produkt aus Reflektivität Rm und dem Parameter $\sigma$ größer oder gleich 1 eingestellt ist. Eine solche Bedingung kann auch sinnvollerweise für einen Optimierungsprozess des Verfahrens zur Herstellung des Schichtsystems als Randbedingung angesetzt werden.

Mit dieser Art von Beschichtung ist es möglich, verschiedenste Entspiegelungen, Verspiegelungen in unterschiedlichster Form und Ausführung sowie verschiedenste optische Filter (IR-Block, Blau-Block, UV-Schutz, High Level Farblos-Antireflex) mit der gleichen Schichtabfolge und den gleichen Materialien herzustellen. Das heißt, der Schichtaufbau ist bezüglich der Wahl des Schichtmaterials und des dazugehörigen Beschichtungsverfahrens immer der gleiche.

Ein wesentlicher Vorteil des erfindungsgemäßen Schichtsystems liegt darin, dass die unterschiedlichen Arten von Beschichtungen sich lediglich in der Wahl der Dicke der einzelnen Teilschichten unterscheiden. Ein Schichtsystem, das mit einem solchen einheitlichen Beschichtungsverfahren hergestellt ist, vereinfacht zudem die gesamte Entwicklung, die Freigabe, das Einfahren der Anlagen, die Prozesspflege und das Anlagenhandling (Bestückung, Justierung, etc.).

Die entsprechende Fachkraft beim Bedienen wie auch beim Einstellen/Justieren der Beschichtungsanlage muss nur noch ein Beschichtungskonzept beherrschen.

Die Art der Anwendung wird bei dieser Art von Beschichtung nicht mehr dominant durch die verwendeten Materialien bestimmt, sondern durch die Schichtabfolge und in Folge dessen durch deren Wirkung auf das gesamte interferometrische System der optischen Beschichtung.

Diese Art von Schichtsystem kann bisher verwendete optische Beschichtungen adaptieren. Durch ein solches Plattform-Konzept für ein Schichtsystem weisen außerdem die derart hergestellten Beschichtungen ähnliche mechanische Schichteigenschaften wie z. B. Haftfestigkeit, Kratzfestigkeit, Beständigkeit gegenüber Wärme, Klima, etc. auf.

Bei einem solchen Schichtsystem kann der Parameter $\sigma$ für einen Stapel aus drei oder fünf aufeinanderfolgenden Schichtpaketen aus

$$\sigma = \frac{v_1}{\sum_{i=2}^{nmax} v_i}$$

bestimmt werden, wobei, i=1 bis nmax, für nmax=3 oder nmax=5, die Reihenfolge der Schichtpakete im Stapel bezeichnet, und $v_i$ sich aus einem Quotienten der optischen Dicke t1 der höherbrechenden Teilschicht zur optischen Dicke t2 der niedrigerbrechenden Teilschicht eines jeweiligen Schichtpakets ergibt. Die optische Dicke t, oder FWOT (full wave optical thickness) bestimmt sich dabei zu

$$t = \frac{d}{\lambda} * n$$

wobei d die Schichtdicke, $\lambda$ die Auslegungswellenlänge, n den Brechungsindex der Teilschicht darstellt.

Für einen Stapel aus vier aufeinander folgenden Schichtpaketen kann der Parameter $\sigma$ aus

$$\sigma = \frac{v_1 + v_2}{v_3 + v_4}$$

bestimmt werden, wobei die Kennzahlen 1 bis 4 den Indizes i aus den Beispielen der Stapel aus drei oder fünf aufeinander folgenden Schichtpaketen entsprechen und die Reihenfolge der Schichtpakete im Stapel bezeichnen, und $v_i$ sich aus einem Quotienten der optischen Dicke t1 der höherbrechenden Teilschicht zur optischen Dicke t2 der niedrigerbrechenden Teilschicht eines jeweiligen Schichtpakets ergibt.

Gemäß einer vorteilhaften Ausgestaltung können in den Schichtpaketen des Stapels niedrigerbrechende Teilschichten und höherbrechende Teilschichten jeweils in gleicher Reihenfolge angeordnet sein. So folgt auf eine niedrigerbrechende Teilschicht in dem gesamten Schichtsystem jeweils immer eine höherbrechende Teilschicht. Dadurch lässt sich auch das Beschichtungsverfahren günstig standardisieren und vereinheitlichen.

Gemäß einer weiteren vorteilhaften Ausgestaltung kann eine Entspiegelung bzw. entspiegelnde Wirkung und/oder antireflektierende Wirkung durch den Stapel von Schichtpaketen erreichbar sein, wenn der Parameter $\sigma$ kleiner als 4, bevorzugt kleiner als 1, ganz besonders bevorzugt kleiner als 0,3 eingestellt ist. Der Stapel von Schichtpaketen weist somit eine Entspiegelung auf, wenn der Parameter $\sigma$ kleiner als 4 ist. Auch dies stellt eine mögliche sinnvolle Randbedingung für einen Optimierungsprozess des Verfahrens zur Herstellung des Schichtsystems dar.

Gemäß einer weiteren vorteilhaften Ausgestaltung kann eine Differenz der Brechungsindizes n1, n2 zwischen einer höherbrechenden Teilschicht zu dem Brechungsindex einer niedrigerbrechenden Teilschicht im gleichen Schichtpaket größer 0,2, bevorzugt größer 0,3, besonders bevorzugt größer 0,4 sein. Solche Differenzen von Brechungsindizes n1, n2 reichen aus, um bei einer Zahl von beispielsweise drei, vier, oder fünf in einem Schichtsystem aufeinander folgenden Schichtpaketen eine gezielte Beeinflussung der optischen Eigenschaften des Schichtsystems in einer gewünschten Weise, insbesondere bei einer Anwendung im Brillengläserbereich zu erreichen.

Gemäß einer weiteren vorteilhaften Ausgestaltung können die hochbrechenden Teilschichten einen ersten Brechungsindex n1 von mindestens 1,6, bevorzugt mindestens 1,7, besonders bevorzugt mindestens 1,8, ganz besonders bevorzugt mindestens 1,9 aufweisen, sowie die niedrigbrechenden Teilschichten einen zweiten Brechungsindex n2 von höchstens 1,55, bevorzugt höchstens 1,48, besonders bevorzugt höchstens 1,4 aufweisen. Diese Angaben von Brechungsindizes beziehen sich auf Normalbedingungen bei einer Temperatur von 25° C sowie eine Referenzwellenlänge der verwendeten Lichtintensität von 550 nm.

Typische Beispiele für Schichtmaterialien mit unterschiedlichen Brechungsindizes sind Siliziumdioxid ($SiO_2$) mit einem Brechungsindex von 1,46, Aluminiumoxid ($Al_2O_3$) mit einem Brechungsindex von 1,7, Zirkondioxid ($ZrO_2$) mit einem Brechungsindex von 2,05, Praseodym-Titanoxid ($PrTiO_3$) mit einem Brechungsindex von 2,1, Titanoxid (TiO2) und Zinksulfid (ZnS) mit jeweils einem Brechungsindex von 2,3. Diese Werte stellen mittlere Werte dar, die je nach Beschichtungsverfahren und Schichtdicke bis zu 10% variieren können.

Übliche optische Gläser weisen Brechungsindizes zwischen 1,5 und 2,0 auf. Schichtmaterialien mit Brechungsindizes kleiner als 1,5 wie $MgF_2$, $SiO_2$, $Al_2O_3$ werden deshalb in Kombination mit optischen Gläsern als niedrig brechende Materialien bezeichnet, Schichtmaterialien mit Brechungsindizes größer als 2,0 wie $ZrO_2$, $PrTiO_3$, $TiO_2$, ZnS werden in Kombination mit optischen Gläsern als hoch brechende Materialien bezeichnet. Der Unterschied der Brechungsindizes zwischen hoch und niedrig brechenden Materialien beträgt demzufolge je nach Beschichtungsverfahren und Schichtdicke mindestens 0,2 bis mindestens 0,5.

Gemäß einer weiteren vorteilhaften Ausgestaltung kann das jeweils letzte Schichtpaket des Stapels von Schichtpaketen zwischen den beiden Teilschichten eine Funktionsschicht aufweisen. Diese Funktionsschicht kann beispielsweise eine antistatische Wirkung durch Erhöhung der elektrischen Leitfähigkeit verbessern, eine elastische Spannungsegalisierung bewirken oder auch als Diffusionssperre eingesetzt werden.

Gemäß einer weiteren vorteilhaften Ausgestaltung können innerhalb des Stapels von Schichtpaketen die niedrigerbrechenden Teilschichten aus gleichartigem Material gebildet sein, und/oder innerhalb des Stapels von Schichtpaketen die höherbrechenden Teilschichten aus gleichartigem Material gebildet sein. Dadurch ist es möglich, das Schichtsystem mit zwei Materialien als Beschichtungswerkstoffe herzustellen, was die gesamte Entwicklung und Herstellung des Schichtsystems sowohl von der Anlagenseite her als auch von der Bedienerseite aus betrachtet sehr vereinfacht und demzufolge auch beschleunigt.

Gemäß einer weiteren vorteilhaften Ausgestaltung können die höherbrechenden Teilschichten wenigstens eines der Materialien $Ta_2O_5$, $TiO_2$, $ZrO_2$, $Al_2O_3$, $Nd_2O_5$, $Pr_2O_3$, $PrTiO_3$, $La_2O_3$, $Nb_2O_5$, $Y_2O_3$, $HfO_2$, ITO (Indium-Zinn-Oxid), $Si_3N_4$, MgO, $CeO_2$ und deren Modifikationen, insbesondere deren andere Oxidationsstufen, aufweisen. Diese Materialien sind bekannt als Werkstoffe mit hohem klassischem Brechungsindex für den Einsatz bei optischen Elementen, wie beispielsweise zur Beschichtung von Brillengläsern. Die höherbrechenden Teilschichten können jedoch auch $SiO_2$ oder andere niedrigerbrechende Materialien enthalten, solange der Brechungsindex der gesamten Teilschicht größer als 1,6 ist.

Gemäß einer weiteren vorteilhaften Ausgestaltung können die niedrigerbrechenden Teilschichten wenigstens eines der Materialien SiO, $SiO_2$, Silane, Siloxane aufweisen. Die niedrigerbrechenden Teilschichten können jedoch auch eine Mischung von $SiO_2$ und $Al_2O_3$ enthalten. Bevorzugt können die niedrigerbrechenden Teilschichten wenigstens 80 Gewichtsprozent $SiO_2$, be-

sonders bevorzugt wenigstens 90 Gewichtsprozent $SiO_2$ enthalten.

Die verwendeten Materialien für diese Art von Beschichtungen sind die typischen Materialien, die in der Optik mittels beispielsweise PVD-Verfahren (PVD = Physical Vapour Deposition (physikalische Gasphasenabscheidung)) oder CVD-Verfahren (CVD = Chemical Vapour Deposition (chemische Gasphasenabscheidung)) aufgebracht werden. Dies heißt, als niedrigerbrechendes Material sind $SiO_2$ und Mischungen mit $SiO_2$ bevorzugt. Als hochbrechendes Material sind alle typischen hochbrechenden oxidischen Materialien und deren Mischungen möglich ($Ta_2O_5$, $Ti_xO_y$, $ZrO_2$, etc.). Die Wahl einer bestimmten Materialkomposition, wie dies bei bisherigen Beschichtungen zum Teil notwendig war, ist bei dem erfindungsgemäßen Schichtsystem nicht mehr gegeben.

Als höherbrechende Materialien können so alle typischen hochbrechenden Metalloxide und deren Mischungen der optischen Industrie verwendet werden ($Ta_2O_5$, $Ti_xO_y$, $ZrO_2$, und dergleichen).

Als niedrigerbrechende Materialien können alle typischen niederbrechenden Metalloxide und deren Mischungen der optischen Industrie verwendet werden (SiO, $SiO_2$; $SiO_2$ mit Zusätzen Al, SiO wie auch Silane und Siloxane in Reinform oder mit deren fluorierten Derivaten, und dergleichen).

In einer vorteilhaften Ausgestaltung kann bei dem optischen Element die zum Substrat hin untere der Teilschichten höherbrechender als die andere der Teilschichten sein. Damit ist die Reihenfolge der Teilschichten der einzelnen Schichtpakete des Schichtsystems definiert, da die höherbrechenden und niedrigerbrechenden Teilschichten in dem Schichtsystem jeweils alternierend angeordnet sind.

Die beschriebenen Beschichtungen können auf das zu beschichtende Substrat beidseitig oder auch nur einseitig aufgebracht werden, sodass gemäß einer weiteren vorteilhaften Ausgestaltung auf zwei gegenüberliegenden Oberflächen des Substrats jeweils ein Schichtsystem vorgesehen sein kann.

Gemäß einer anderen vorteilhaften Ausgestaltung können die auf zwei gegenüberliegenden Oberflächen des Substrats vorgesehenen Schichtsysteme eine unterschiedliche Anzahl von Schichtpaketen aufweisen. Auch kann das eine der beiden Schichtsysteme eine zusätzliche Funktionsschicht auf dem obersten Schichtpaket aufweisen, während das andere der beiden Schichtsysteme eine solche nicht aufweist.

Gemäß einer weiteren vorteilhaften Ausgestaltung kann die wenigstens eine Oberfläche des Substrats mit einer Hartschicht beschichtet sein. Diese Hartschicht kann als organische Lackschicht oder auch als anorganische Schicht wie zum Beispiel $SiO_2$, optional mit möglichen Additiven, ausgelegt sein.

Die Erfindung betrifft ein Verfahren zur Herstellung eines erfindungsgemäßen optischen Elements mit einem Schichtsystem, wobei optische Eigenschaften des Schichtsystems abhängig von einem Parameter $\sigma$ eingestellt werden, indem die jeweiligen Schichtpakete abhängig von einem Quotienten $v_i$ einer ersten optischen Dicke t1 jeweils einer höherbrechenden ersten Teilschicht und einer zweiten optischen Dicke t2 einer niedrigerbrechenden zweiten Teilschicht des Schichtpakets gebildet sind, wobei der Index i die Reihenfolge der aufeinander folgenden Schichtpakete im Stapel bezeichnet. Der Parameter $\sigma$ ist dabei eine Funktion eines Verhältnisses der Quotienten $v_i$, wobei der Index i die Reihenfolge der aufeinander folgenden Schichtpakete im Stapel bezeichnet, wobei die höherbrechende Teilschicht insbesondere eine hochbrechende Teilschicht umfasst und die niedrigerbrechende Teilschicht insbesondere eine niedrigbrechende Teilschicht umfasst. Dabei ist eine über den sichtbaren Bereich des Lichts von 380 nm bis 800 nm gemittelte Reflektivität Rm des Stapels von Schichtpaketen in Prozent vorgebbar. Es wird ein Produkt aus Reflektivität Rm und dem Parameter $\sigma$ kleiner als 1 eingestellt, um eine Entspiegelung bzw. entspiegelnde Wirkung und/oder antireflektierende Wirkung des Stapels von Schichtpaketen zu erreichen, oder größer oder gleich 1 eingestellt, um eine Verspiegelung bzw. verspiegelnde Wirkung zu erreichen. Die optischen Dicken t1, t2 der ersten und zweiten Teilschichten eines oder mehrerer Schichtpakete werden dadurch bestimmt, dass der Parameter $\sigma$ mittels eines Optimierungsverfahrens, bevorzugt mittels Variationsrechnung, bestimmt wird. Die ersten und zweiten Teilschichten werden darauf mit den berechneten Parametern, insbesondere den optischen Dicken t1, t2 der Teilschichten der Schichtpakete eines Stapels von Schichtpaketen hergestellt.

Die optischen Eigenschaften des Schichtsystems können durch geeignete Wahl des Parameters $\sigma$, bzw. des Produkts Reflektivität Rm * $\sigma$, eingestellt werden, wie oben bereits beschrieben. Beispielsweise kann eine Entspiegelung und/oder antireflektierende Wirkung durch den Stapel von Schichtpaketen erreichbar sein, wenn der Parameter $\sigma$ kleiner als 4, bevorzugt kleiner als 1, ganz besonders bevorzugt kleiner als 0,3 eingestellt ist.

Weiter kann eine Entspiegelung/-anti-reflektierende Wirkung durch den Stapel von Schichtpaketen für eine vorgebbare Reflektivität Rm des Stapels von Schichtpaketen erreichbar sein, wenn das Produkt aus Reflektivität Rm und dem Parameter $\sigma$ kleiner als 1 eingestellt ist. Alternativ kann eine Verspiegelung für eine vorgebbare Reflektivität Rm des Stapels von Schichtpaketen erreichbar sein, wenn das Produkt aus Reflektivität Rm und dem Parameter $\sigma$ größer oder gleich 1 eingestellt ist.

Vorteilhaft können die Schichtdicken der höherbrechenden Teilschichten zwischen 2 und 150 nm, sowie die optischen Dicken t1 zwischen 0,01 und 0,55 eingestellt werden. Weiter können die Schichtdicken der niedrigerbrechenden Teilschichten zwischen 2 und 200 nm, sowie die optischen Dicken t2 zwischen 0,01 und 0,53 eingestellt werden. Diese Minimalwerte und Maximalwerte für die Schichtdicken und/oder die optischen Dicken t1, t2 der Teilschichten bilden vorteilhafterweise Grenzwerte des Optimierungsverfahrens.

Der Parameter σ wird über eine Variation der optischen Dicken der einzelnen Teilschichten dabei soweit optimiert, dass der Parameter σ im gewünschten Bereich liegt. Diese Variation kann über nichtlineare Optimierungsverfahren erreicht werden, wobei eines der möglichen Verfahren die Variationsrechnung darstellt. Es sind jedoch auch andere Verfahren der lokalen oder globalen nichtlinearen Optimierung denkbar, so beispielsweise Evolutionäre Algorithmen, Cluster-Analyse, oder Neuronale Netze. Dabei ist auch eine iterative Vorgehensweise denkbar, dass nämlich Messresultate von hergestellten Schichtsystemen wiederum in die Parameter einer neuen Optimierungsrechnung eingehen, um so zuverlässigere Resultate zu erzielen. Für die Optimierung können beispielsweise kommerziell erhältliche Optimierungs-/Berechnungsverfahren z.B. von Thin Film Center Inc. (Softwarepaket Essential Macleod) oder Filmstar eingesetzt werden.

## Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**

Fig. 1 ein optisches Element nach einem Ausführungsbeispiel der Erfindung mit auf beiden Oberflächen eines Substrats angeordneten Schichtsystemen;

Fig. 2 ein Schichtsystem nach einem Ausführungsbeispiel der Erfindung mit drei Schichtpaketen;

Fig. 3 ein Schichtsystem nach einem weiteren Ausführungsbeispiel der Erfindung mit vier Schichtpaketen;

Fig. 4 ein Schichtsystem nach einem anderen Ausführungsbeispiel der Erfindung mit fünf Schichtpaketen;

Fig. 5 Parameter eines Schichtsystems nach einem Ausführungsbeispiel der Erfindung mit drei Schichtpaketen für Anwendungen als Antireflex grün -, Antireflex Blau-Block- und Antireflex UV - Beschichtung;

Fig. 6 Parameter eines Schichtsystems nach einem Ausführungsbeispiel der Erfindung mit drei Schichtpaketen für Anwendungen als Antireflex farblos -, Antireflex rot -, und Antireflex gold - Beschichtung;

Fig. 7 Parameter eines Schichtsystems nach einem Ausführungsbeispiel der Erfindung mit drei Schichtpaketen für Anwendungen als blaue Verspiegelung, rote Verspiegelung, grüne Verspiegelung und goldene Verspiegelung;

Fig. 8 Parameter eines Schichtsystems nach einem weiteren Ausführungsbeispiel der Erfindung mit vier Schichtpaketen für Anwendungen als Antireflex grün -, Antireflex Blau-Block- und Antireflex UV - Beschichtung;

Fig. 9 Parameter eines Schichtsystems nach einem weiteren Ausführungsbeispiel der Erfindung mit vier Schichtpaketen für Anwendungen als Antireflex farblos -, Antireflex rot -, und Antireflex gold - Beschichtung;

Fig. 10 Parameter eines Schichtsystems nach einem weiteren Ausführungsbeispiel der Erfindung mit vier Schichtpaketen für Anwendungen als blaue Verspiegelung, rote Verspiegelung, grüne Verspiegelung und goldene Verspiegelung;

Fig. 11 Parameter eines Schichtsystems nach einem anderen Ausführungsbeispiel der Erfindung mit fünf Schichtpaketen für Anwendungen als Antireflex grün -, Antireflex Blau-Block- und Antireflex UV - Beschichtung;

Fig. 12 Parameter eines Schichtsystems nach einem anderen Ausführungsbeispiel der Erfindung mit fünf Schichtpaketen für Anwendungen als Antireflex farblos -, Antireflex rot -, und Antireflex gold - Beschichtung;

Fig. 13 Parameter eines Schichtsystems nach einem anderen Ausführungsbeispiel der Erfindung mit fünf Schichtpaketen für Anwendungen als blaue Verspiegelung, rote Verspiegelung, grüne Verspiegelung und goldene Verspiegelung;

Fig. 14 eine Reflexionskurve eines Schichtsystems nach einem Ausführungsbeispiel der Erfindung mit vier Schichtpaketen für eine Anwendung als Antireflex Blau-Block - Filter;

Fig. 15 eine Reflexionskurve eines Schichtsystems nach einem Ausführungsbeispiel der Erfindung mit vier Schichtpaketen für eine Anwendung als Antireflex farblos - Beschichtung;

Fig. 16 eine Reflexionskurve eines Schichtsystems nach einem Ausführungsbeispiel der Erfindung mit vier Schichtpaketen für eine Anwendung als Antireflex UV - Filter;

Fig. 17 eine Reflexionskurve eines Schichtsystems nach einem Ausführungsbeispiel der Erfindung mit vier Schichtpaketen für eine Anwendung als Antireflex rot - Beschichtung;

Fig. 18 eine Reflexionskurve eines Schichtsystems nach einem Ausführungsbeispiel der Erfindung mit vier Schichtpaketen für eine Anwendung als Antireflex gelb - Beschichtung;

Fig. 19 eine Reflexionskurve eines Schichtsystems nach einem Ausführungsbeispiel der Erfindung mit vier Schichtpaketen für eine Anwendung als rote Verspiegelung; und

Fig. 20 eine Reflexionskurve eines Schichtsystems nach einem Ausführungsbeispiel der Erfindung mit vier Schichtpaketen für eine Anwendung als blaue Verspiegelung.

## Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Figur 1 zeigt ein optisches Element 100 nach einem Ausführungsbeispiel der Erfindung mit auf beiden Oberflächen 60, 62 eines Substrats 12 angeordneten Schichtsystemen 10, 11. Das Substrat 12 ist bei dem gezeigten Ausführungsbeispiel auf beiden Oberflächen 60, 62 jeweils mit einer Hartschicht 16 beschichtet, worauf jeweils ein Schichtsystem 10, 11 aufgebracht ist. Diese Hartschicht 16 kann als organische Lackschicht oder auch als anorganische Schicht wie zum Beispiel $SiO_2$, gegebenenfalls auch mit möglichen Additiven, ausgelegt sein.

Vor dem Aufbringen des Schichtsystems 10, 11 können die Oberflächen 60, 62 mittels einer Plasmabehandlung konditioniert werden. Dem Plasma können verschiedene Gase, wie Ar, $O_2$, $N_2$, oder dergleichen zugesetzt werden. Die Konditionierung kann eine Aktivierung, aber auch eine Funktionalisierung der zu beschichtenden Oberfläche beispielsweise zum Zweck der Verdichtung darstellen. Auch die oberste Teilschicht des Schichtsystems 10, 11 kann einer solchen Plasmakonditionierung unterzogen werden.

Die beiden Schichtsysteme 10, 11 können durchaus auch unterschiedlichen Aufbau haben, indem sie eine unterschiedliche Anzahl von Schichtpaketen aufweisen. Auch kann das eine der beiden Schichtsysteme 10, 11 eine zusätzliche Funktionsschicht auf dem obersten Schichtpaket aufweisen, während das andere der beiden Schichtsysteme 10, 11 eine solche nicht aufweist.

Figur 2 zeigt dazu exemplarisch ein Schichtsystem 10 nach einem Ausführungsbeispiel der Erfindung mit drei Schichtpaketen 20, 22, 24. Als unterste Schicht weist das Schichtsystem 10 eine Haftschicht 18 zur besseren Haftung direkt auf dem Substrat 12 oder auf der auf dem Substrat 12 aufgebrachten Hartschicht 16 auf. Diese Haftschicht 18 kann beispielsweise aus unterstöchiometrischen niederbrechenden Metalloxiden, Chrom, Silanen sowie auch aus Siloxanen bestehen.

Darauf sind dann die jeweiligen Schichtpakete 20, 22, 24 nacheinander angeordnet, wobei die Schichtpakete 20, 22 jeweils aus einer höherbrechenden Teilschicht 30, gefolgt von einer niedrigerbrechenden Teilschicht 32 bestehen. Die zum Substrat 12 hin untere der Teilschichten 30 ist höherbrechender als die andere der Teilschichten 32. Das oberste Schichtpaket 24 weist zwischen der höherbrechenden Teilschicht 30 und der niedrigerbrechenden Teilschicht 32 noch eine Funktionsschicht 54 auf, welche beispielsweise zur Erhöhung der elektrischen Leitfähigkeit, zur Spannungsegalisierung, oder als Diffusionssperre wirken kann. Diese optisch relevante Funktionsschicht 54 kann aus einem niedrigbrechenden Material aufgebaut sein, sowie mit anderen Metalloxiden wie zum Beispiel Aluminium legiert sein.

Auf dem obersten Schichtpaket 24 ist noch eine Funktionsschicht 52 angeordnet. Die Funktionsschicht 52 wird auf die letzte optisch relevante Teilschicht 32 des Schichtpakets 24 aufgebracht und kann fluorhaltige Moleküle enthalten. Die Funktion dieser Funktionsschicht 52 stellt üblicherweise eine verbesserte Pflegeeigenschaft, mit Eigenschaften wie wasser- und ölabweisende Funktion bei einer Oberflächenenergie von typischerweise kleiner 15 mN/m dar.

Das Verfahren zur Herstellung des Schichtsystems 10, wobei optische Eigenschaften des Schichtsystems 10 eingestellt werden, geht davon aus, dass die jeweiligen Schichtpakete 20, 22, 24 abhängig von einem Quotienten $v_1$, $v_2$, $v_3$ einer ersten optischen Dicke t1 jeweils einer höherbrechenden ersten Teilschicht 30 und einer zweiten optischen Dicke t2 einer niedrigerbrechenden zweiten Teilschicht 32 des Schichtpakets 20, 22, 24 gebildet sind und ein Parameter $\sigma$ eine Funktion eines Verhältnisses der Quotienten $v_1$, $v_2$, $v_3$ ist. Die optischen Dicken t1, t2 der ersten und zweiten Teilschichten 30, 32 eines oder mehrerer Schichtpakete 20, 22, 24 werden dadurch bestimmt, dass der Parameter $\sigma$ mittels eines Optimierungsverfahrens, bevorzugt mittels Variationsrechnung, bestimmt wird, und die ersten und zweiten Teilschichten 30, 32 mit den berechneten Parametern, insbesondere den optischen Dicken t1, t2 der Teilschichten 30, 32 der Schichtpakete 20, 22, 24 eines Stapels 14 von Schichtpaketen 20, 22, 24 hergestellt werden. In ähnlicher Weise können Schichtsysteme 10 mit vier oder fünf Schichtpaketen 20, 22, 24, 26, 28 mittels Variation des Parameters $\sigma$ hergestellt werden.

In Figur 3 ist ein ähnliches Schichtsystem 10 wie in Figur 2 nach einem weiteren Ausführungsbeispiel der Erfindung mit vier Schichtpaketen 20, 22, 24, 26 dargestellt. Es enthält ein weiteres Schichtpaket 26. Bei diesem Ausführungsbeispiel ist die Funktionsschicht 54 in das Schichtpaket 26 eingebaut, da dieses das äußerste Schichtpaket des Schichtsystems 10 darstellt. Die weitere Funktionsschicht 52 ist auf die letzte Teilschicht 32 des äußersten Schichtpakets 26 aufgebracht.

Figur 4 zeigt ein weiteres Schichtsystem 10 nach einem anderen Ausführungsbeispiel der Erfindung mit fünf Schichtpaketen 20, 22, 24, 26, 28. Bei diesem Ausführungsbeispiel ist die Funktionsschicht 54 in das Schichtpaket 28 eingebaut, da dieses das äußerste Schichtpaket des Schichtsystems 10 darstellt. Die weitere Funktionsschicht 52 ist auf die letzte Teilschicht 32 des äußersten Schichtpakets 28 aufgebracht.

In Figur 5 sind Parameter eines Schichtsystems 10 nach einem Ausführungsbeispiel der Erfindung mit drei Schichtpaketen 20, 22, 24 für Anwendungen mit Antiref_g für eine Antireflex grün-Beschichtung, Antiref_bb für eine Antireflex Blau-Block-Beschichtung und Antiref_uv für eine Antireflex UV-Beschichtung aufgelistet. Der Parameter d bezeichnet die Dicke und der Parameter MAT bezeichnet das Schichtmaterial.

Die Schichtpakete 20, 22, 24 sind jeweils aus Teilschichten 30 mit dem gleichartigen Material $Ta_2O_5$ und Teilschichten 32 mit dem gleichartigen Material $SiO_2$ aufgebaut. Das oberste Schichtpaket 24 weist zwischen den beiden Teilschichten 30, 32 eine Funktionsschicht 54 mit $Al_2O_3$ auf. $Ta_2O_5$ weist dabei typischerweise einen Brechungsindex von 2,03 auf, $SiO_2$ weist typischerweise je nach Packungsdichte einen Brechungsindex von 1,46 bis 1,62 auf, $Al_2O_3$ weist typischerweise einen Brechungsindex von 1,67 auf. Die Differenz der Brechungsindizes der höherbrechenden zu der niedrigerbrechenden Teilschicht liegt demzufolge zwischen 0,2 bis 0,5.

Der Brechungsindex von beispielsweise $Ta_2O_5$ und $TiO_2$ lässt sich zum Beispiel mittels Plasmastützung in bestimmten Bereichen einstellen. Beispielsweise für $Ta_2O_5$ lässt sich auf diese Weise der Brechungsindex zwischen etwa 1,95 und 2,15 einstellen. Ähnliches gilt für $TiO_2$.

Das Schichtsystem 10, das Figur 5 zugrunde liegt, weist einen Stapel 14 von aufeinander folgenden Schichtpaketen 20, 22, 24 auf, wobei jedes Schichtpaket 20, 22, 24 eine erste Teilschicht 30 mit einer ersten optischen Dicke t1 und eine zweite Teilschicht 32 mit einer zweiten, von der ersten optischen Dicke t1 verschiedenen optischen Dicke t2 umfasst. Optische Eigenschaften des Schichtpakets 20, 22, 24 sind abhängig von dem Parameter $\sigma$ vorgebbar. Die jeweiligen Schichtpakete 20, 22, 24 sind abhängig von einem Quotienten $v_1$, $v_2$, $v_3$ der optischen Dicke t1 jeweils einer höherbrechenden Teilschicht 30 und einer optischen Dicke t2 der niedrigerbrechenden Teilschicht 32 des Schichtpakets 20, 22, 24 gebildet. Die höherbrechende Teilschicht 30 umfasst insbesondere eine hochbrechende Teilschicht 30, bei dem Ausführungsbeispiel in Figur 5 $Ta_2O_5$, und die niedrigerbrechende Teilschicht 32 umfasst insbesondere eine niedrigbrechende Teilschicht 32, bei dem Ausführungsbeispiel in Figur 5 $SiO_2$ Der Parameter $\sigma$ ist eine Funktion eines Verhältnisses der Quotienten $v_1$, $v_2$, $v_3$. Die optischen Dicken t1, t2 sind in Figur 5 unter der Spalte FWOT jeweils für die Teilschichten 30, 32 aufgelistet. Zusätzlich sind auch die physikalischen Dicken in nm dargestellt. In den Schichtpaketen 20, 22, 24 des Stapels 14 sind niedrigerbrechende Teilschichten 32 und höherbrechende Teilschichten 30 jeweils in gleicher Reihenfolge angeordnet.

Der Parameter $\sigma$ für einen Stapel 14 aus drei aufeinander folgenden Schichtpaketen 20, 22, 24 in Figur 5 ist $\sigma$ nach der Formel

$$\sigma = \frac{v_1}{\sum_{i=2}^{nmax} v_i}$$

mit i=1 bis nmax, für nmax=3, was die Reihenfolge der Schichtpakete im Stapel bezeichnet,

$$\sigma = \frac{v_1}{v_2 + v_3}$$

$v_1$, $v_2$, $v_3$ ergeben sich aus einem Quotienten der optischen Dicke t1 der höherbrechenden Teilschicht 30 zur optischen Dicke t2 der niedrigerbrechenden Teilschicht 32 eines jeweiligen Schichtpakets 20, 22, 24, wobei $v_1$ dem dem Substrat am nächsten liegende Schichtpaket 20, $v_2$ dem mittleren Schichtpaket 22 und $v_3$ dem äußersten Schichtpaket 24 zugordnet ist. Eine Reflektivität Rm des Stapels 14 von Schichtpaketen 20, 22, 24 ist vorgebbar. Dabei ist eine Entspiegelung/anti-reflektierende Wirkung durch den Stapel 14 von Schichtpaketen 20, 22, 24 erreichbar, wenn das Produkt aus Reflektivität Rm und dem Parameter $\sigma$ kleiner als 1 eingestellt ist. Die Reflektivität Rm ist dabei gemittelt im sichtbaren Bereich zwischen 380 und 800 nm. Eine Verspiegelung ist erreichbar, wenn das Produkt aus Reflektivität Rm und dem Parameter $\sigma$ größer oder gleich 1 eingestellt ist. Eine Entspiegelung und/oder antireflektierende Wirkung durch den Stapel 14 von Schichtpaketen 20, 22, 24 ist auch erreichbar, wenn der Parameter $\sigma$ kleiner als 4, bevorzugt kleiner als 1, ganz besonders bevorzugt kleiner als 0,3 eingestellt ist.

Figur 6 zeigt die Parameter des Schichtsystems 10 nach dem Ausführungsbeispiel der Erfindung für einen Stapel 14 mit drei Schichtpaketen 20, 22, 24 für Anwendungen mit Antiref_f für eine Antireflexfarblos-Beschichtung, mit Antiref_r für eine Antireflex rot-Beschichtung, und mit Antiref_go für eine Antireflex gold-Beschichtung, und Figur 7 für Anwendungen von Beschichtungen mit V_b für eine blaue Verspiegelung, V_r für eine rote Verspiegelung, V_g grüne Verspiegelung und V_go für eine goldene Verspiegelung. Der Parameter d bezeichnet die Dicke und der Parameter MAT bezeichnet das Schichtmaterial. Dabei ist zu erkennen, dass eine Verspiegelung erreicht wird bei einem Produkt aus Reflektivität Rm und dem Parameter σ, also σ * Rm, von größer 1, die bei dem beschriebenen Ausführungsbeispiel größenordnungsmäßig bei Werten zwischen 11 und 21 liegen. Für σ * Rm-Werte von kleiner 1 wird dagegen eine Entspiegelung/Antireflex-Wirkung erreicht. σ liegt bei den Entspiegelungsschichtsystemen bei Werten kleiner oder gleich 0,31.

Figur 8 zeigt die entsprechenden Parameter eines Schichtsystems 10 nach einem weiteren Ausführungsbeispiel der Erfindung für einen Stapel 14 mit vier Schichtpaketen 20, 22, 24, 26, die aus den jeweils gleichartigen Teilschichten 30 aus $Ta_2O_5$ und Teilschichten 32 aus $SiO_2$ aufgebaut sind, für Anwendungen mit Antiref_g für eine Antireflex grün-Beschichtung, Antiref_bb für eine Antireflex Blau-Block-Beschichtung und Antiref_uv für eine Antireflex UV-Beschichtung. Der Parameter d bezeichnet die Dicke und der Parameter MAT bezeichnet das Schichtmaterial. Auch hier weist das oberste Schichtpaket 26 eine Funktionsschicht 54 aus $Al_2O_3$ zwischen den Teilschichten 30 und 32 auf.

Der Parameter σ für die vier Schichtpakete 20, 22, 24, 26 in Figur 8 ist

$$\sigma = \frac{v_1 + v_2}{v_3 + v_4}$$

$v_1$, $v_2$, $v_3$, $v_4$ ergeben sich aus einem Quotienten der optischen Dicke t1 der höherbrechenden Teilschicht 30 zur optischen Dicke t2 der niedrigerbrechenden Teilschicht 32 eines jeweiligen Schichtpakets 20, 22, 24, 26, wobei $v_1$ dem Schichtpaket 20, $v_2$ dem Schichtpaket 22, $v_3$ dem Schichtpaket 24 und $v_4$ dem Schichtpaket 26 zugeordnet ist.

Figur 9 zeigt die Parameter des Schichtsystems 10 nach dem Ausführungsbeispiel mit vier Schichtpaketen 20, 22, 24, 26 für Anwendungen mit Antrief_f für eine Antireflex farblosBeschichtung, Antiref_r für eineAntireflex rotBeschichtung, und Antiref_go für eineAntireflex gold-Beschichtung. Der Parameter d bezeichnet die Dicke und der Parameter MAT bezeichnet das Schichtmaterial.

Figur 10 die Parameter des Schichtsystems 10 nach dem Ausführungsbeispiel mit vier Schichtpaketen 20, 22, 24, 26 für Anwendungen mit V_b für eine blaue Verspiegelung, V_r für eine rote Verspiegelung, V_g für eine grüne Verspiegelung und V_go für eine goldene Verspiegelung. Der Parameter d bezeichnet die Dicke und der Parameter MAT bezeichnet das Schichtmaterial. Auch hier ist zu erkennen, dass eine Verspiegelung erreicht wird bei einem Produkt aus Reflektivität Rm und dem Parameter σ, also σ * Rm, von größer 1, die bei dem beschriebenen Ausführungsbeispiel größenordnungsmäßig bei Werten zwischen 4 und 50 liegen. Für σ * Rm - Werte von kleiner 1 wird dagegen eine Entspiegelung/Antireflex-Wirkung erreicht. σ liegt bei den Entspiegelungsschichtsystemen bei Werten kleiner oder gleich 0,41.

In Figur 11 sind entsprechende Parameter eines Schichtsystems 10 nach einem anderen Ausführungsbeispiel der Erfindung für einen Stapel 14 mit fünf Schichtpaketen 20, 22, 24, 26, 28, die aus den jeweils gleichartigen Teilschichten 30 aus $Ta_2O_5$ und Teilschichten 32 aus $SiO_2$ aufgebaut sind, für Anwendungen mit Antiref_g für eine Antireflex grün-Beschichtung, Antiref_bb für eine Antireflex Blau-Block-Beschichtung und Antiref_uv für eine Antireflex UV-Beschichtung gezeigt. Der Parameter d bezeichnet die Dicke und der Parameter MAT bezeichnet das Schichtmaterial. Auch hier weist das oberste Schichtpaket 28 eine Funktionsschicht 54 aus $Al_2O_3$ zwischen den Teilschichten 30 und 32 auf.

Der Parameter σ für fünf Schichtpakete 20, 22, 24, 26, 28 in Figur 11 ist σ nach der Formel

$$\sigma = \frac{v_1}{\sum_{i=2}^{nmax} v_i}$$

mit i=1 bis nmax, für nmax=5, was die Reihenfolge der Schichtpakete im Stapel bezeichnet,

$$\sigma = \frac{v_1}{v_2 + v_3 + v_4 + v_5}$$

$v_1$, $v_2$, $v_3$, $v_4$, $v_5$ ergeben sich aus einem Quotienten der optischen Dicke t1 der höherbrechenden Teilschicht 30 zur optischen Dicke t2 der niedrigerbrechenden Teilschicht 32 eines jeweiligen Schichtpakets 20, 22, 24, 26, 28, wobei $v_1$ dem Schichtpaket 20, $v_2$ dem Schichtpaket 22, $v_3$ dem Schichtpaket 24, $v_4$ dem Schichtpaket 26 und $v_5$ dem Schichtpaket 28 zugeordnet ist.

Figur 12 zeigt die Parameter des Schichtsystems 10 nach dem Ausführungsbeispiel mit fünf Schichtpaketen 20, 22, 24, 26, 28 für Anwendungen mit Antiref_f für eine Antireflex farblos-Beschichtung, Antiref_r für eine Antireflex rot-Beschichtung, und Antiref_go für eine Antireflex gold-Beschichtung und Figur 13 für Anwendungen mit V_b für eine blaue Verspiegelung, V_r für eine rote Verspiegelung, V_g für eine grüne Verspiegelung und V_go für eine goldene Verspiegelung. Der Parameter d bezeichnet die Dicke und der Parameter MAT bezeichnet das Schichtmaterial. Auch hier ist zu erkennen, dass eine Verspiegelung erreicht wird bei einem Produkt aus Reflektivität Rm und dem Parameter σ, also σ * Rm, von größer 1, die bei dem beschriebenen Ausführungsbeispiel größenordnungsmäßig bei Werten zwischen 1,06 und 27 liegen. Für das Produkt σ * Rm von kleiner 1 wird dagegen eine Entspiegelung/Antireflex-Wirkung erreicht. σ liegt bei den Entspiegelungsschichtsystemen bei Werten kleiner oder gleich 0,22. σ liegt bei dem Schichtsystem 10 der blauen Verspiegelung in Figur 13 auch bei 0,14, jedoch ist das Produkt σ * Rm 1.06, also größer als 1. Das Produkt σ * Rm stellt also eine hinreichende Bedingung dafür dar, dass das Schichtsystem 10 die gewünschte Verspiegelung aufweist.

Figur 14 zeigt eine Reflexionskurve eines Schichtsystems 10 nach einem Ausführungsbeispiel der Erfindung mit vier Schichtpaketen 20, 22, 24, 26 für eine Anwendung als Antireflex Blau-Block-Filter, wobei die Reflexion R in % über der Wellenlänge λ in nm aufgetragen ist. Das Maximum der Reflexionskurve liegt demzufolge im blauen Bereich des Spektrums bei einer Wellenlänge des Lichts von ca. 300 nm, um so die Transmission des blauen Anteils des Lichts zu minimieren. Oberhalb von ca. 400 nm ist die Reflexion sehr niedrig, also die Transmission sehr hoch.

Figur 15 zeigt dagegen eine Reflexionskurve eines Schichtsystems 10 nach einem Ausführungsbeispiel der Erfindung mit vier Schichtpaketen 20, 22, 24, 26 für eine Anwendung als Antireflex farblos-Beschichtung, wobei die Reflexion R in % über der Wellenlänge λ in nm aufgetragen ist.. Hierbei ist die Reflexion minimal im Wellenlängenbereich zwischen 380 und 580 nm und steigt dann langsam wieder an, ist aber bei 800 nm immer noch unter 5%. So ist die Transmission über einen weiten sichtbaren Bereich des Lichts sehr hoch.

In Figur 16 ist eine Reflexionskurve eines Schichtsystems 10 nach einem Ausführungsbeispiel der Erfindung mit vier Schichtpaketen 20, 22, 24, 26 für eine Anwendung als Antireflex UV-Filter dargestellt, wobei die Reflexion R in % über der Wellenlänge λ in nm aufgetragen ist.. In diesem Ausführungsbeispiel steigt die Reflexionskurve unterhalb einer Grenzwellenlänge von ca. 300 nm zu kleineren Werten sehr steil an. Dadurch wird dieser UV-Anteil des Lichts wirksam geblockt, während der sichtbare Bereich eine sehr hohe Transmission von bis zu 95 % aufweist.

Figur 17 zeigt eine Reflexionskurve eines Schichtsystems 10 nach einem Ausführungsbeispiel der Erfindung mit vier Schichtpaketen 20, 22, 24, 26 für eine Anwendung als Antireflex rot-Beschichtung, wobei die Reflexion R in % über der Wellenlänge λ in nm aufgetragen ist.. Bei diesem Ausführungsbeispiel wird der UV-Anteil wirksam geblockt, da die Reflexion in diesem Bereich unterhalb von ca. 350 nm sehr hoch ist. Gleichzeitig steigt aber die Reflexion ab 580 nm auch an, was bedeutet, dass das Antireflex-Schichtsystem den Rotanteil des Lichts auch reflektiert, während die Transmission zwischen 380 nm und 580 nm sehr hoch ist.

Figur 18 zeigt eine Reflexionskurve eines Schichtsystems 10 nach einem Ausführungsbeispiel der Erfindung mit vier Schichtpaketen 20, 22, 24, 26 für eine Anwendung als Antireflex gelb-Beschichtung, wobei die Reflexion R in % über der Wellenlänge λ in nm aufgetragen ist.. Bei diesem Ausführungsbeispiel ist ein Maximum der Reflexion bei einer Wellenlänge von ca. 350 nm zu erkennen, während der Bereich größer 400 nm eine sehr geringe Reflexion aufweist. Dadurch liegt der Anteil des Lichts, der transmittiert wird, deutlich im gelben Bereich, da der blaue Bereich reflektiert wird.

In Figur 19 ist eine Reflexionskurve eines Schichtsystems 10 nach einem Ausführungsbeispiel der Erfindung mit vier Schichtpaketen 20, 22, 24, 26 für eine Anwendung als rote Verspiegelung dargestellt, wobei die Reflexion R in % über der Wellenlänge λ in nm aufgetragen ist.. Bei diesem Ausführungsbeispiel steigt die Reflexion sowohl unterhalb von 300 nm als auch im roten Bereich oberhalb von 580 nm stark an, was bedeutet, dass die Verspiegelungsschicht rot erscheint.

Figur 20 zeigt dagegen eine Reflexionskurve eines Schichtsystems 10 nach einem Ausführungsbeispiel der Erfindung mit vier Schichtpaketen 20, 22, 24, 26 für eine Anwendung als blaue Verspiegelung, wobei die Reflexion R in % über der Wellenlänge λ in nm aufgetragen ist.. Bei diesem Ausführungsbeispiel zeigt sich eine relativ hohe Reflexion in einem Wellenlängenbereich zwischen ca. 350 nm und 580 nm. Dies lässt die Verspiegelungsschicht blau erscheinen, da der rote Anteil des Lichts oberhalb von ca. 580 nm transmittiert wird.

## Patentansprüche

1. Verfahren zur Herstellung eines optischen Elements (100), das ein auf wenigstens einer Oberfläche (60, 62) eines Substrats (12) angeordnetes interferometrisches Schichtsystems (10, 11) mit einem Stapel (14) von drei, vier oder fünf aufeinanderfolgenden Schichtpaketen (20, 22, 24, 26, 28) umfasst,

   wobei jedes Schichtpaket (20, 22, 24, 26, 28) eine erste Teilschicht (30) mit einer ersten optischen Dicke (t1) und eine zweite Teilschicht (32) mit einer zweiten, von der ersten optischen Dicke (t1) verschiedenen optischen Dicke (t2) umfasst und
   die zum Substrat (12) hin nähere der Teilschichten (30) höherbrechender als die andere der Teilschichten (32) ist,
   wobei die erste Teilschicht (30) eine höherbrechende Teilschicht (30) und die zweite Teilschicht (32) eine niedrigerbrechende Teilschicht (32) ist und wobei die höherbrechende Teilschicht (30) insbesondere eine hochbrechende Teilschicht (30) umfasst und die niedrigerbrechende Teilschicht (32) insbesondere eine niedrigbrechende Teilschicht (32) umfasst,

   **dadurch gekennzeichnet, dass**
   optische Eigenschaften des Schichtsystems (10) durch Variation der Dicken der Schichtpakete (20, 22, 24, 26) im Stapel (14) mit gleicher Anzahl von Schichtpaketen (20, 22, 24, 26) bei gleicher Schichtabfolge und gleichbleibenden Materialien der Schichtpakete (20, 22, 24, 26) abhängig von einem Parameter (σ) eingestellt werden,
   indem die jeweiligen Schichtpakete (20, 22, 24, 26, 28) abhängig von einem Quotienten ($v_i$) einer ersten optischen Dicke (t1) jeweils einer höherbrechenden ersten Teilschicht (30) und einer zweiten optischen Dicke (t2) einer niedrigerbrechenden zweiten Teilschicht (32) des Schichtpakets (20, 22, 24, 26, 28) gebildet werden, wobei der Index i die Reihenfolge der aufeinander folgenden Schichtpakete (20, 22, 24, 26, 28) im Stapel (14) bezeichnet, und der Parameter (o) eine Funktion eines Verhältnisses der Quotienten ($v_i$) ist,

wobei für den jeweiligen Stapel (14) eine über den sichtbaren Bereich des Lichts von 380 nm bis 800 nm gemittelte, in Prozent angegebene Reflektivität (Rm) des Stapels (14) von Schichtpaketen (20, 22, 24, 26, 28) vorgegeben wird, und wobei ein Produkt ($\sigma$* Rm) aus Reflektivität (Rm) und dem Parameter (o) kleiner als 1 eingestellt wird, um eine entspiegelnde und/oder antireflektierende Wirkung des Stapels (14) von Schichtpaketen (20, 22, 24, 26, 28) zu erreichen, oder größer oder gleich 1 eingestellt wird, um eine verspiegelnde Wirkung dieses Stapels (14) zu erreichen,

und wobei die optischen Dicken (t1, t2) der ersten und zweiten Teilschichten (30, 32) eines oder mehrerer Schichtpakete (20, 22, 24, 26, 28) dadurch bestimmt werden, dass der Parameter (o) mittels eines Optimierungsverfahrens bestimmt wird, und die ersten und zweiten Teilschichten (30, 32) mit den berechneten Parametern, insbesondere den optischen Dicken (t1, t2) der Teilschichten (30, 32) der Schichtpakete (20, 22, 24, 26, 28) eines Stapels (14) von Schichtpaketen (20, 22, 24, 26, 28), hergestellt werden,

wobei

die Funktion des Verhältnisses von Quotienten ($v_i$) der optischen Dicke (t1) jeweils einer höherbrechenden Teilschicht (30) und der optischen Dicke (t2) einer niedrigerbrechenden Teilschicht (32) des Schichtpakets (20, 22, 24, 26, 28) für den der Parameter ($\sigma$)

(i) für einen Stapel (14) aus drei oder fünf aufeinander folgenden Schichtpaketen (20, 22, 24, 26, 28)

$$\sigma = \frac{v_1}{\sum_{i=2}^{nmax} v_i}$$

ist, und wobei i=1 bis nmax, für nmax=3 oder nmax=5, die Reihenfolge der Schichtpakete (20, 22. 24, 26, 28) im Stapel (14) bezeichnet und $v_i$ sich aus einem Quotienten der optischen Dicke (t1) der höherbrechenden Teilschicht (30) zur optischen Dicke (t2) der niedrigerbrechenden Teilschicht (32) eines jeweiligen Schichtpakets (20, 22, 24, 26, 28) ergibt, oder

(ii) für einen Stapel (14) aus vier aufeinander folgenden Schichtpaketen (20, 22, 24, 26)

$$\sigma = \frac{v_1 + v_2}{v_3 + v_4}$$

ist,

und wobei die Kennzahlen 1 bis 4 die Reihenfolge der Schichtpakete (20, 22, 24, 26) im Stapel (14) bezeichnen und $v_i$ mit i=1 bis 4 sich aus einem Quotienten der optischen Dicke (t1) der höherbrechenden Teilschicht (30) zur optischen Dicke (t2) der niedrigerbrechenden Teilschicht (32) eines jeweiligen Schichtpakets (20, 22, 24, 26) ergibt.

**2.** Verfahren nach Anspruch 1, **dadurch gekennzeichnet, dass** bei dem Optimierungsverfahren als Grenzwerte für die Schichtdicken der höherbrechenden Teilschichten Minimalwerte von 2 nm und Maximalwerte von 150 nm, sowie für die ersten optischen Dicken (t1) Minimalwerte von 0,01 und Maximalwerte von 0,55 eingestellt werden, und wobei als Grenzwerte für die Schichtdicken der niedrigerbrechenden Teilschichten Minimalwerte von 2 nm und Maximalwerte von 200 nm, sowie für die zweiten optischen Dicken (t2) Minimalwerte von 0,01 und Maximalwerte von 0,53 eingestellt werden.

**3.** Verfahren nach einem der Ansprüche 1 oder 2, **dadurch gekennzeichnet, dass** in den Schichtpaketen (20, 22, 24, 26, 28) des Stapels (14) niedrigerbrechende Teilschichten (32) und höherbrechende Teilschichten (30) jeweils in gleicher Reihenfolge angeordnet werden.

**4.** Verfahren nach einem der Ansprüche 1 bis 3, **dadurch gekennzeichnet, dass** der jeweilige Stapel (14) von Schichtpaketen (20, 22, 24, 26, 28) eine entspiegelnde Wirkung aufweist, wenn der Parameter (o) kleiner als 4, bevorzugt kleiner als 1, ganz besonders bevorzugt kleiner als 0,3, ist.

**5.** Verfahren nach einem der Ansprüche 1 bis 4, **dadurch gekennzeichnet, dass** in dem jeweils letzten Schichtpaket (24, 26, 28) des jeweiligen Stapels (14) von Schichtpaketen (20, 22, 24, 26, 28) zwischen den beiden Teilschichten (30, 32) eine Funktionsschicht (54), insbesondere eine niedrigbrechende Funktionsschicht (54) zur Erhöhung der elektrischen Leitfähigkeit, zur Spannungsegalisierung oder als Diffusionssperre angeordnet wird.

**6.** Verfahren nach einem der Ansprüche 1 bis 5, **dadurch gekennzeichnet, dass** auf zwei gegenüberliegenden Oberflächen (60, 62) des Substrats (12) jeweils ein Schichtsystem (10, 11) mit gleicher Anzahl an Schichtpaketen (20, 22, 24, 26, 28), oder mit einer unterschiedlichen Anzahl von Schichtpaketen (20, 22, 24, 26, 28) angeordnet wird.

**Claims**

1. A method for producing an optical element (100), comprising an interferometric layer system (10, 11) arranged on at least one surface (60, 62) of a substrate (12) with a stack (14) of three, four or five successive layer packages (20, 22, 24, 26, 28),
wherein each layer package (20, 22, 24, 26, 28) comprises a first partial layer (30) with a first optical thickness (t1) and a second partial layer (32) with a second optical thickness (t2) which is different from the first optical thickness (t1) and
the partial layer (30), which is nearer to the substrate (12) has a higher refractive index than the other of the partial layers (32),
wherein the first partial layer (30) is a higher refractive partial layer (30) and the second partial layer (32) is a lower refractive partial layer (32) and wherein the higher refractive partial layer (30) comprises in particular a high refractive partial layer (30) and the lower refractive partial layer (32) comprises in particular a low refractive partial layer (32),
**characterized in that**
optical properties of the layer system (10) are set by varying the thicknesses of the layer packages (20, 22, 24, 26) in the stack (14) with the same number of layer packages (20, 22, 24, 26) with the same layer sequence and constant materials of the layer packages (20, 22, 24, 26) depending on a parameter ($\sigma$),
wherein the respective layer packages (20, 22, 24, 26, 28) are formed depending on a quotient ($v_i$) of a first optical thickness (t1) of each higher refractive first partial layer (30) and a second optical thickness (t2) of a lower refractive second partial layer (32) of the layer package (20, 22, 24, 26, 28), the index i denoting the sequence of the successive layer packages (20, 22, 24, 26, 28) in the stack (14), and the parameter ($\sigma$) is a function of the ratio of the quotients ($v_i$),
wherein for the respective stack (14) a reflectivity (Rm), of the stack (14) of layer packages (20, 22, 24, 26, 28) is specified in percentage, averaged over the visible range of light from 380 nm to 800 nm,
and wherein a product ($\sigma$ * Rm) of reflectivity (Rm) and the parameter ($\sigma$) is set to less than 1 in order to achieve a non-glare and / or anti-reflective effect of the stack (14) of layer packages (20, 22, 24, 26 , 28), or is set greater than or equal to 1, in order to achieve a mirroring effect of this stack,
and wherein the optical thicknesses (t1, t2) of the first and second partial layers (30, 32) of one or more layer packages (20, 22, 24, 26, 28) are determined by determining the parameter ($\sigma$) by means of an optimization method, and the first and second partial layers (30, 32) are produced with the calculated parameters, in particular the optical thicknesses (t1, t2) of the partial layers (30, 32) of the layer packages (20, 22, 24, 26, 28) of a stack (14) of layer packets (20, 22, 24, 26, 28),
the functions of the ratio of quotients ($v_i$) or the optical thickness (t1) of a higher refractive sublayer (30) and the optical thickness (t2) of a lower refractive sublayer (32) of the layer package (20, 22, 24, 26, 28) for the parameter ($\sigma$) is

(i) for a stack (14) of three or five successive layer packages (20, 22, 24, 26, 28)

$$\sigma = \frac{v_1}{\sum_{i=2}^{nmax} v_i}$$

and where i = 1 to nmax, for nmax = 3 or nmax = 5, denotes the sequence of the layer packages (20, 22, 24, 26, 28) in the stack (14) and $v_i$ is a quotient of the optical thickness (t1) of the higher refractive partial layer (30) to the optical thickness (t2) of the lower refractive partial layer (32) of a respective layer package (20, 22, 24, 26, 28).
or
(ii) for a stack (14) of four successive layer packages (20, 22, 24, 26)

$$\sigma = \frac{v_1 + v_2}{v_3 + v_4}$$

and wherein the indices 1 to 4 denote the sequence of the layer packages (20, 22, 24, 26) in the stack (14) and $v_i$ with i = 1 to 4, is derived from a quotient of the optical thickness (t1) of the higher refractive index layer (30) to the optical thickness (t2) of the lower refractive index layer (32) of a respective layer package (20, 22, 24, 26).

2. The method according to claim 1, **characterized in that** in the optimization method, as limit values for the layer thicknesses of the higher refractive partial layers are set as minimum values of 2 nm and maximum values of 150 nm, and for the first optical thicknesses (t1) minimum values of 0.01 and maximum values of 0,55, and wherein the limit values for the layer thicknesses of the lower refractive partial layers are set to minimum values of 2 nm and maximum values of 200 nm, and for the second optical thicknesses (t2) minimum values of 0.01 and maximum values of 0.53.

3. The method according to any one of claims 1 or 2, **characterized in that** in the layer packages (20, 22, 24, 26, 28) of the stack (14) of lower refractive partial layers (32) and higher refractive partial layers (30) are each arranged in the same order.

4. The method according to any one of claims 1 to 3, **characterized in that** the respective stack (14) of layer packages (20, 22, 24, 26, 28) has an anti-reflective effect if the parameter (a) is less than 4, preferably is less than 1, most preferably less than 0.3.

5. The method according to any one of claims 1 to 4, **characterized in that** in each last layer package (24, 26, 28) of the respective stack (14) of layer packages (20, 22, 24, 26, 28) between the two sub-layers (30, 32) a functional layer (54) is arranged, in particular a low-refractive functional layer (54) for increasing the electrical conductivity, for voltage equalization or as a diffusion barrier.

6. The method according to any one of claims 1 to 5, **characterized in that** on two opposite surfaces (60, 62) of the substrate (12) each have a layer system (10, 11) with the same number of layer packages (20, 22, 24, 26, 28), or with a different number of layer packages (20, 22, 24, 26, 28).

## Revendications

1. Procédé de production d'un élément optique (100), comprenant un système de couche interférométrique (10, 11) disposé sur au moins une surface (60, 62) d'un substrat (12) avec une pile (14) de trois, quatre ou cinq packages de couches successives (20, 22, 24, 26, 28),
dans lequel chaque paquet de couches (20, 22, 24, 26, 28) comprend une première couche partielle (30) avec une première épaisseur optique (t1) et une deuxième couche partielle (32) avec une seconde épaisseur optique (t2) qui est différente à partir de la première épaisseur optique (t1) et
la couche partielle (30), qui est plus proche du substrat (12) a un indice de réfraction plus élevé que l'autre des couches partielles (32),
dans lequel la première couche partielle (30) est une couche partielle de réfraction supérieure (30) et la deuxième couche partielle (32) est une couche partielle de réfraction inférieure (32) et dans laquelle la couche partielle de réfraction supérieure (30) comprend en particulier une couche partielle de réfraction élevée (30) et la couche partielle de réfraction inférieure (32) comprennent en particulier une couche partielle de faible réfraction (32),
**caractérisé en ce que**
les propriétés optiques du système de couches (10) sont définies en faisant varier les épaisseurs des paquets de couches (20, 22, 24, 26) dans la pile (14) avec le même nombre de paquets de couches (20, 22, 24, 26) avec la même séquence de couches et les mêmes matériaux constants des paquets de couches (20, 22, 24, 26) en fonction d'un paramètre (σ), dans lequel les paquets de couches respectifs (20, 22, 24, 26, 28) sont formés en fonction d'un quotient ($v_i$) d'une première épaisseur optique (t1) de chaque première couche partielle à réfraction supérieure (30) et d'une seconde épaisseur optique (t2) d'une deuxième couche partielle à réfraction inférieure (32) de l'ensemble de couches (20, 22, 24, 26, 28), l'indice i indiquant la séquence des ensembles de couches successifs (20, 22, 24, 26, 28) dans la pile (14), et le paramètre (σ) est fonction du rapport des quotients ($v_i$),
dans lequel pour la pile respectif (14) une réflectivité (Rm), de l'empilement (14) des paquets de couches (20, 22, 24, 26, 28) est spécifiée en pourcentage, moyennée sur la plage de lumière visible de 380 nm à 800 nm,
et dans lequel un produit (σ * Rm) de réflectivité (Rm) et le paramètre (σ) sont fixés à moins de 1 afin d'obtenir un effet anti-reflets et / ou antireflet de la pile (14) de paquets de couches (20, 22, 24, 26, 28), ou est fixé supérieur ou égal à 1, afin d'obtenir un effet miroir de cette pile,
et dans lequel les épaisseurs optiques (t1, t2) des première et deuxième couches partielles (30, 32) d'un ou plusieurs ensembles de couches (20, 22, 24, 26, 28) sont déterminées en déterminant le paramètre (σ) au moyen d'un procédé d'optimisation, et les premières et deuxièmes couches partielles (30, 32) sont produites avec les paramètres calculés, en particulier les épaisseurs optiques (t1, t2) des couches partielles (30, 32) des paquets de couches (20, 22, 24, 26, 28) d'une pile (14) de paquets de couches (20, 22, 24, 26, 28),
les fonctions du rapport des quotients (vi) ou de l'épaisseur optique (t1) d'une sous-couche à réfraction supérieure (30) et de l'épaisseur optique (t2) d'une sous-couche à réfraction inférieure (32) de l'ensemble de couches (20, 22, 24 , 26, 28) pour le paramètre (σ) est

(i) pour une pile (14) de trois ou cinq paquets de couches successives (20, 22, 24, 26, 28)

$$\sigma = \frac{v_1}{\sum_{i=2}^{nmax} v_i}$$

où i = 1 à nmax, pour nmax = 3 ou nmax = 5, désigne la séquence des paquets de couches (20, 22, 24, 26, 28) dans la pile (14) et $v_i$ est un quotient de l'épaisseur optique (t1) de la couche partielle de réfraction supérieure (30) à l'épaisseur optique (t2) de la couche partielle de réfraction inférieure (32) d'un ensemble de couches respectif (20, 22, 24, 26, 28),
ou
(ii) pour une pile (14) de quatre paquets de couches successives (20, 22, 24, 26)

$$\sigma = \frac{v_1 + v_2}{v_3 + v_4}$$

dans lequel les indices 1 à 4 désignent la séquence des paquets de couches (20, 22, 24, 26) dans la pile (14) et $v_i$ avec i = 1 à 4, est dérivé d'un quotient de l'épaisseur optique (t1) de la couche à indice de réfraction supérieur (30) à l'épaisseur optique (t2) de la couche à indice de réfraction inférieur (32) d'un ensemble de couches respectif (20, 22, 24, 26).

**2.** Procédé selon la revendication 1, **caractérisé en ce que** dans le procédé d'optimisation, comme valeurs limites pour les épaisseurs de couche des couches partielles réfringentes supérieures sont fixées des valeurs minimales de 2 nm et des valeurs maximales de 150 nm, et pour la première épaisseurs optique (t1) les valeurs minimales sont fixées de 0,01 et valeurs maximales de 0,55 sont fixées, et dans lequel les valeurs limites pour les épaisseurs de couche des couches partielles réfractives inférieures sont fixées à des valeurs minimales de 2 nm et des valeurs maximales de 200 nm, et pour la seconde épaisseurs optiques (t2) des valeurs minimales de 0,01 et valeurs maximales de 0,53 sont fixées.

**3.** Procédé selon l'une quelconque des revendications 1 ou 2, **caractérisé en ce que** dans les paquets de couches (20, 22, 24, 26, 28) de la pile (14) de couches partielles réfractives inférieures (32) et les couches partielles réfringentes supérieures (30) sont chacune disposées dans le même ordre.

**4.** Procédé selon l'une quelconque des revendications 1 à 3, **caractérisé en ce que** la pile respectif (14) de paquets de couches (20, 22, 24, 26, 28) a un effet antireflet si le paramètre (σ) est inférieure à 4, de préférence inférieure à 1, de manière préférée inférieure à 0,3.

**5.** Procédé selon l'une quelconque des revendications 1 à 4, **caractérisé en ce que** dans chaque dernier paquet de couches (24, 26, 28) de la pile respective (14) de paquets de couches (20, 22, 24, 26, 28) entre les deux sous-couches (30, 32) une couche fonctionnelle (54) est disposée, notamment une couche fonctionnelle à faible réfraction (54) pour augmenter la conductivité électrique, pour l'égalisation de tension ou comme barrière de diffusion.

**6.** Procédé selon l'une quelconque des revendications 1 à 5, **caractérisé en ce que** sur deux surfaces opposées (60, 62) du substrat (12) ont chacune un système de couches (10, 11) avec le même nombre de paquets de couches (20, 22, 24, 26, 28), ou avec un nombre différent de paquets de couches (20, 22, 24, 26, 28).

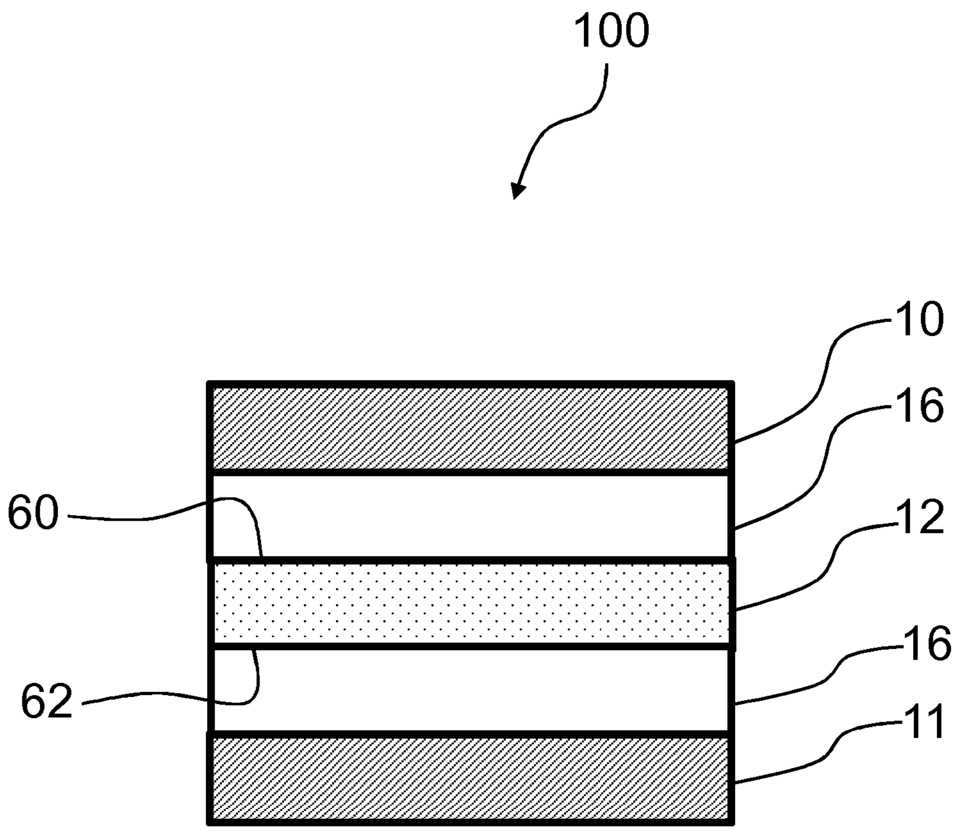


Fig. 1

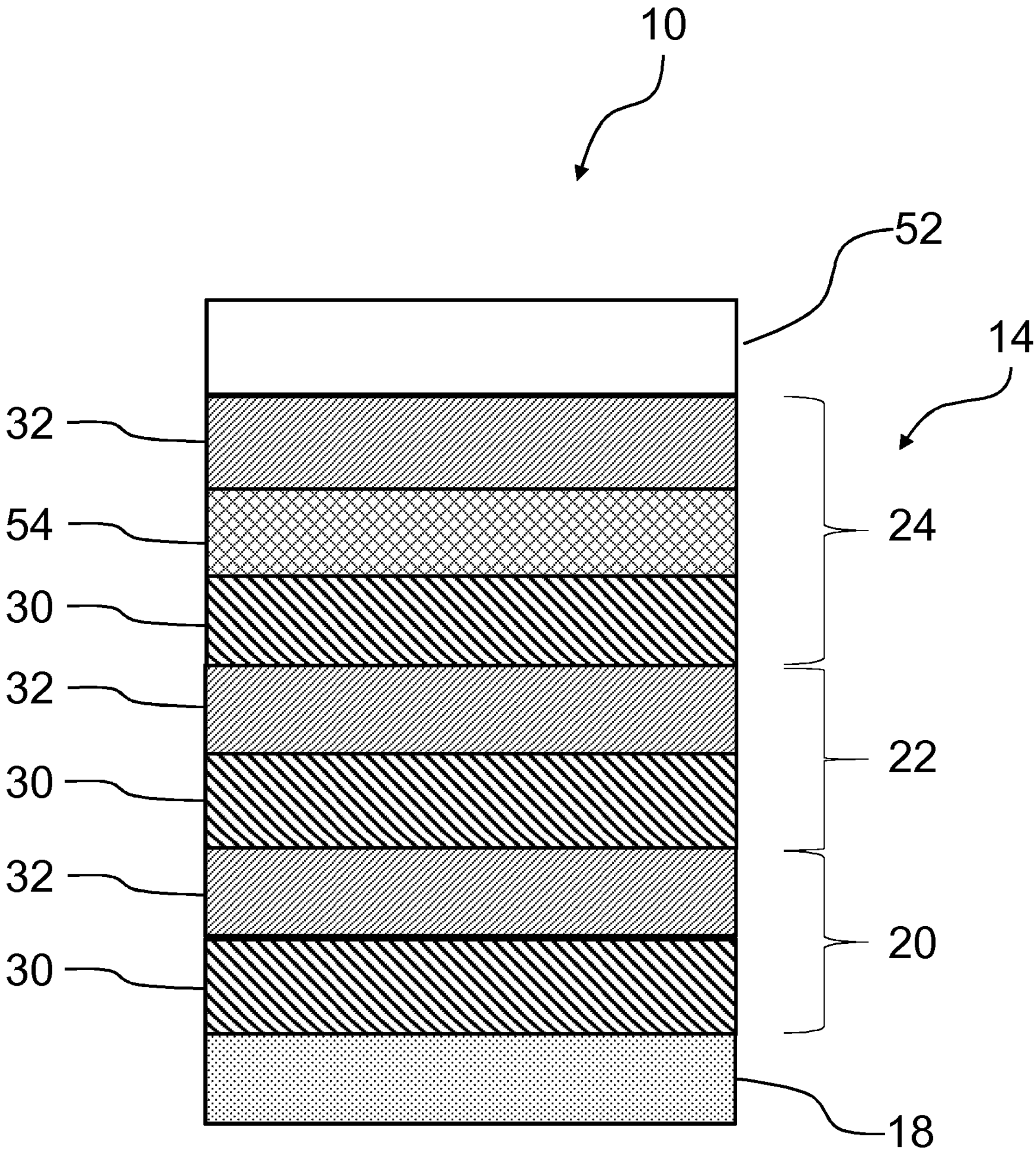


Fig. 2

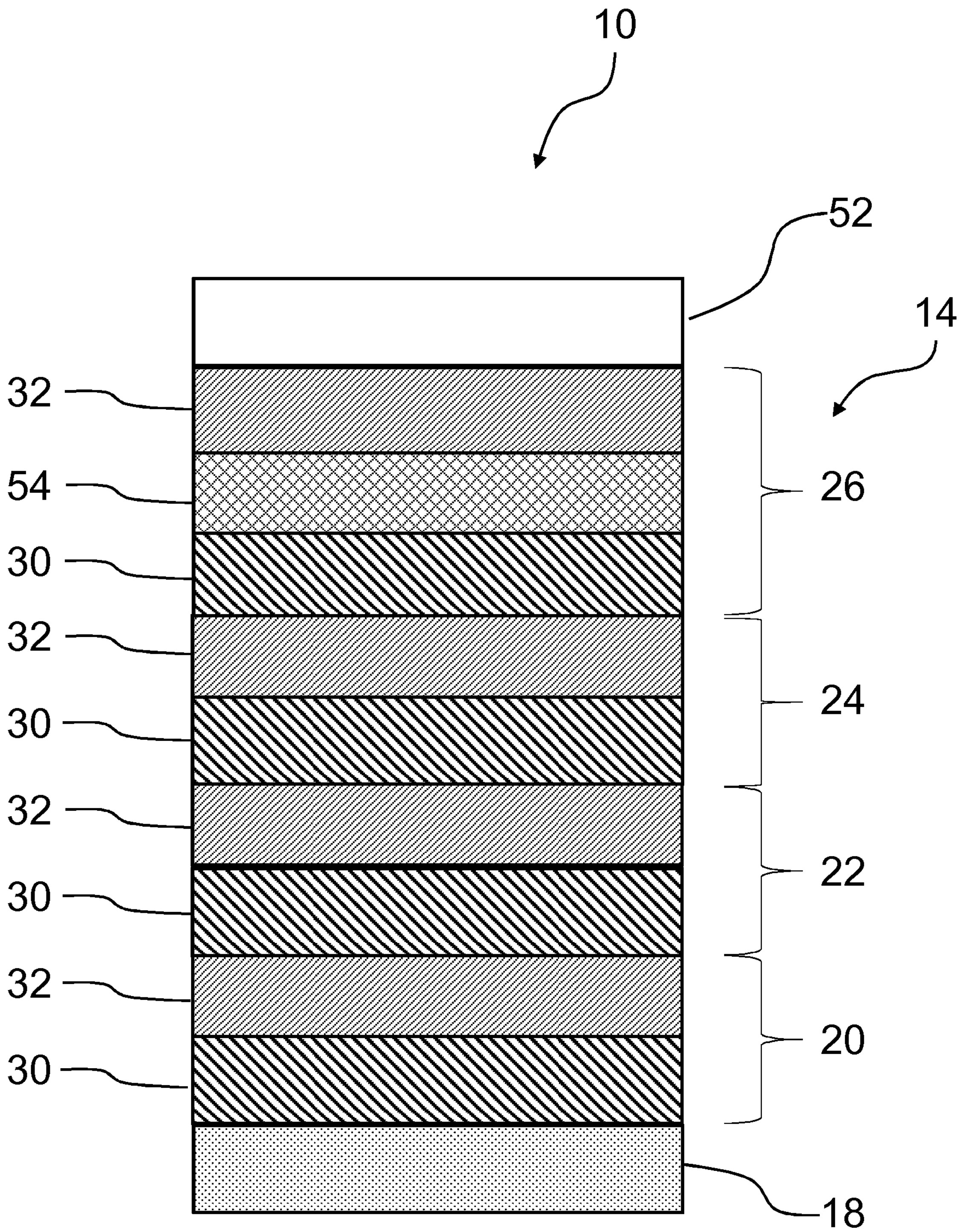


Fig. 3

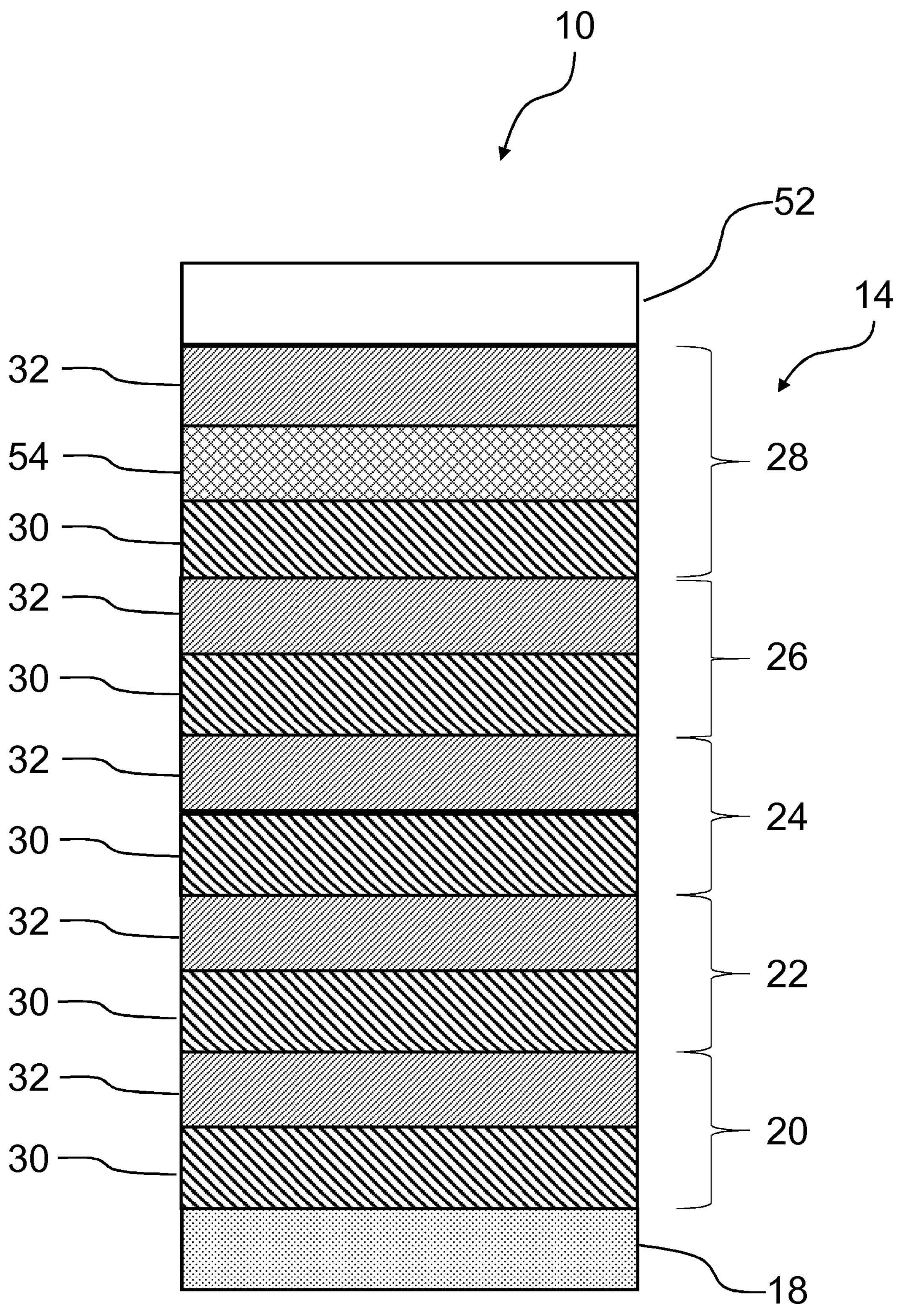


Fig. 4

| | | Antiref_g | | | Antiref_bb | | | Antiref_uv | | |
|---|---|---|---|---|---|---|---|---|---|---|
| | | MAT | d / nm | FWOT | MAT | d / nm | FWOT | MAT | d / nm | FWOT |
| 24 | 32 | $SiO_2$ | 74,3 | 0,20 | $SiO_2$ | 90,0 | 0,24 | $SiO_2$ | 70,4 | 0,19 |
| | 54 | $Al_2O_3$ | 10,0 | 0,03 | $Al_2O_3$ | 10,0 | 0,03 | $Al_2O_3$ | 10,0 | 0,03 |
| | 30 | $Ta_2O_5$ | 149,0 | 0,55 | $Ta_2O_5$ | 124,0 | 0,46 | $Ta_2O_5$ | 77,7 | 0,29 |
| 22 | 32 | $SiO_2$ | 15,8 | 0,04 | $SiO_2$ | 30,0 | 0,08 | $SiO_2$ | 1,9 | 0,00 |
| | 30 | $Ta_2O_5$ | 62,4 | 0,17 | $Ta_2O_5$ | 27,0 | 0,07 | $Ta_2O_5$ | 31,8 | 0,09 |
| 20 | 32 | $SiO_2$ | 25,5 | 0,07 | $SiO_2$ | 42,0 | 0,11 | $SiO_2$ | 16,1 | 0,04 |
| | 30 | $Ta_2O_5$ | 24,2 | 0,09 | $Ta_2O_5$ | 6,0 | 0,02 | $Ta_2O_5$ | 15,0 | 0,06 |
| | σ | | | 0,21 | | | 0,08 | | | 0,07 |
| | Rm | | | 1,89 | | | 1,22 | | | 1,15 |
| | σ* Rm | | | 0,39 | | | 0,09 | | | 0,08 |

Fig. 5

| | | Antiref_f | | | Antiref_r | | | Antiref_go | | |
|---|---|---|---|---|---|---|---|---|---|---|
| | | MAT | d / nm | FWOT | MAT | d / nm | FWOT | MAT | d / nm | FWOT |
| 24 | 32 | $SiO_2$ | 71,9 | 0,19 | $SiO_2$ | 69,0 | 0,18 | $SiO_2$ | 74,1 | 0,20 |
| | 54 | $Al_2O_3$ | 10,0 | 0,03 | $Al_2O_3$ | 10,0 | 0,03 | $Al_2O_3$ | 10,0 | 0,03 |
| | 30 | $Ta_2O_5$ | 71,0 | 0,26 | $Ta_2O_5$ | 50,0 | 0,18 | $Ta_2O_5$ | 35,0 | 0,13 |
| 22 | 32 | $SiO_2$ | 1,3 | 0,00 | $SiO_2$ | 12,0 | 0,03 | $SiO_2$ | 26,8 | 0,07 |
| | 30 | $Ta_2O_5$ | 52,8 | 0,14 | $Ta_2O_5$ | 38,0 | 0,10 | $Ta_2O_5$ | 27,2 | 0,07 |
| 20 | 32 | $SiO_2$ | 26,6 | 0,07 | $SiO_2$ | 28,0 | 0,07 | $SiO_2$ | 33,9 | 0,09 |
| | 30 | $Ta_2O_5$ | 19,3 | 0,07 | $Ta_2O_5$ | 12,0 | 0,04 | $Ta_2O_5$ | 11,9 | 0,04 |
| | σ | | | 0,02 | | | 0,15 | | | 0,31 |
| | Rm | | | 0,88 | | | 1,83 | | | 2,01 |
| | σ* Rm | | | 0,02 | | | 0,27 | | | 0,62 |

Fig. 6

| | | V_b | | | V_r | | | V_g | | | V_go | | |
|---|---|---|---|---|---|---|---|---|---|---|---|---|---|
| | | MAT | d / nm | FWOT | MAT | d / nm | FWOT | MAT | d / nm | FWOT | MAT | d / nm | FWOT |
| 24 | 32 | $SiO_2$ | 110,3 | 0,29 | $SiO_2$ | 63,0 | 0,17 | $SiO_2$ | 162,3 | 0,43 | $SiO_2$ | 50,0 | 0,13 |
| 24 | 54 | $Al_2O_3$ | 10,0 | 0,03 | $Al_2O_3$ | 10,0 | 0,03 | $Al_2O_3$ | 10,0 | 0,03 | $Al_2O_3$ | 10,0 | 0,03 |
| 24 | 30 | $Ta_2O_5$ | 66,2 | 0,24 | $Ta_2O_5$ | 58,0 | 0,21 | $Ta_2O_5$ | 56,5 | 0,21 | $Ta_2O_5$ | 75,0 | 0,28 |
| 22 | 32 | $SiO_2$ | 18,7 | 0,05 | $SiO_2$ | 60,0 | 0,16 | $SiO_2$ | 99,0 | 0,26 | $SiO_2$ | 33,0 | 0,09 |
| 22 | 30 | $Ta_2O_5$ | 5,5 | 0,01 | $Ta_2O_5$ | 6,0 | 0,02 | $Ta_2O_5$ | 15,8 | 0,04 | $Ta_2O_5$ | 34,0 | 0,09 |
| 20 | 32 | $SiO_2$ | 15,2 | 0,04 | $SiO_2$ | 73,0 | 0,20 | $SiO_2$ | 129,0 | 0,34 | $SiO_2$ | 21,0 | 0,06 |
| 20 | 30 | $Ta_2O_5$ | 32,3 | 0,12 | $Ta_2O_5$ | 113,0 | 0,42 | $Ta_2O_5$ | 64,6 | 0,24 | $Ta_2O_5$ | 48,0 | 0,18 |
| | σ | | | 2,81 | | | 1,82 | | | 1,14 | | | 1,16 |
| | Rm | | | 5,44 | | | 10,59 | | | 18,41 | | | 9,75 |
| | σ* Rm | | | 15,27 | | | 19,24 | | | 20,92 | | | 11,32 |

Fig. 7

| | | Antiref_g | | | Antiref_bb | | | Antiref_uv | | |
|---|---|---|---|---|---|---|---|---|---|---|
| | | MAT | d / nm | FWOT | MAT | d / nm | FWOT | MAT | d / nm | FWOT |
| 26 | 32 | $SiO_2$ | 78,0 | 0,21 | $SiO_2$ | 103,0 | 0,28 | $SiO_2$ | 70,0 | 0,19 |
| | 54 | $Al_2O_3$ | 10,0 | 0,03 | $Al_2O_3$ | 10,0 | 0,03 | $Al_2O_3$ | 13,5 | 0,04 |
| | 30 | $Ta_2O_5$ | 50,0 | 0,18 | $Ta_2O_5$ | 39,0 | 0,14 | $Ta_2O_5$ | 112,0 | 0,41 |
| 24 | 32 | $SiO_2$ | 4,0 | 0,01 | $SiO_2$ | 32,0 | 0,09 | $SiO_2$ | 25,0 | 0,07 |
| | 30 | $Ta_2O_5$ | 33,0 | 0,12 | $Ta_2O_5$ | 28,5 | 0,11 | $Ta_2O_5$ | 24,0 | 0,09 |
| 22 | 32 | $SiO_2$ | 78,0 | 0,21 | $SiO_2$ | 84,0 | 0,22 | $SiO_2$ | 62,0 | 0,17 |
| | 30 | $Ta_2O_5$ | 8,5 | 0,02 | $Ta_2O_5$ | 10,5 | 0,03 | $Ta_2O_5$ | 15,0 | 0,04 |
| 20 | 32 | $SiO_2$ | 69,0 | 0,18 | $SiO_2$ | 91,0 | 0,24 | $SiO_2$ | 50,0 | 0,13 |
| | 30 | $Ta_2O_5$ | 4,5 | 0,02 | $Ta_2O_5$ | 6,5 | 0,02 | $Ta_2O_5$ | 10,0 | 0,04 |
| | σ | | | 0,02 | | | 0,13 | | | 0,17 |
| | Rm | | | 1,55 | | | 1,88 | | | 1,63 |
| | σ * Rm | | | 0,03 | | | 0,25 | | | 0,27 |

Fig. 8

| | | Antiref_f | | | Antiref_r | | | Antiref_go | | |
|---|---|---|---|---|---|---|---|---|---|---|
| | | MAT | d / nm | FWOT | MAT | d / nm | FWOT | MAT | d / nm | FWOT |
| 26 | 32 | $SiO_2$ | 72,0 | 0,19 | $SiO_2$ | 67,0 | 0,18 | $SiO_2$ | 83,0 | 0,22 |
| | 54 | $Al_2O_3$ | 11,0 | 0,03 | $Al_2O_3$ | 10,0 | 0,03 | $Al_2O_3$ | 10,0 | 0,03 |
| | 30 | $Ta_2O_5$ | 3,0 | 0,01 | $Ta_2O_5$ | 44,0 | 0,16 | $Ta_2O_5$ | 59,0 | 0,22 |
| 24 | 32 | $SiO_2$ | 16,8 | 0,04 | $SiO_2$ | 14,0 | 0,04 | $SiO_2$ | 28,0 | 0,07 |
| | 30 | $Ta_2O_5$ | 25,0 | 0,09 | $Ta_2O_5$ | 40,0 | 0,15 | $Ta_2O_5$ | 35,0 | 0,13 |
| 22 | 32 | $SiO_2$ | 34,0 | 0,09 | $SiO_2$ | 21,0 | 0,06 | $SiO_2$ | 100,0 | 0,27 |
| | 30 | $Ta_2O_5$ | 20,0 | 0,05 | $Ta_2O_5$ | 8,0 | 0,02 | $Ta_2O_5$ | 9,0 | 0,02 |
| 20 | 32 | $SiO_2$ | 42,0 | 0,11 | $SiO_2$ | 16,0 | 0,04 | $SiO_2$ | 74,0 | 0,20 |
| | 30 | $Ta_2O_5$ | 8,5 | 0,03 | $Ta_2O_5$ | 7,0 | 0,03 | $Ta_2O_5$ | 14,0 | 0,05 |
| | σ | | | 0,41 | | | 0,21 | | | 0,14 |
| | Rm | | | 1,37 | | | 1,93 | | | 1,54 |
| | σ* Rm | | | 0,56 | | | 0,40 | | | 0,21 |

Fig. 9

| | | V_b | | | V_r | | | V_g | | | V_go | | |
|---|---|---|---|---|---|---|---|---|---|---|---|---|---|
| | | MAT | d / nm | FWOT | MAT | d / nm | FWOT | MAT | d / nm | FWOT | MAT | d / nm | FWOT |
| 26 | 32 | $SiO_2$ | 133,0 | 0,36 | $SiO_2$ | 57,0 | 0,15 | $SiO_2$ | 97,0 | 0,26 | $SiO_2$ | 49,0 | 0,13 |
| | 54 | $Al_2O_3$ | 13,0 | 0,04 | $Al_2O_3$ | 10,0 | 0,03 | $Al_2O_3$ | 13,5 | 0,04 | $Al_2O_3$ | 15,0 | 0,05 |
| | 30 | $Ta_2O_5$ | 82,0 | 0,30 | $Ta_2O_5$ | 90,0 | 0,33 | $Ta_2O_5$ | 34,0 | 0,13 | $Ta_2O_5$ | 81,0 | 0,30 |
| 24 | 32 | $SiO_2$ | 25,0 | 0,07 | $SiO_2$ | 123,0 | 0,33 | $SiO_2$ | 13,5 | 0,04 | $SiO_2$ | 90,0 | 0,24 |
| | 30 | $Ta_2O_5$ | 20,5 | 0,08 | $Ta_2O_5$ | 5,5 | 0,02 | $Ta_2O_5$ | 77,0 | 0,28 | $Ta_2O_5$ | 37,0 | 0,14 |
| 22 | 32 | $SiO_2$ | 37,0 | 0,10 | $SiO_2$ | 18,0 | 0,05 | $SiO_2$ | 35,0 | 0,09 | $SiO_2$ | 10,0 | 0,03 |
| | 30 | $Ta_2O_5$ | 9,0 | 0,02 | $Ta_2O_5$ | 109,0 | 0,29 | $Ta_2O_5$ | 91,0 | 0,24 | $Ta_2O_5$ | 64,0 | 0,17 |
| 20 | 32 | $SiO_2$ | 10,0 | 0,03 | $SiO_2$ | 26,0 | 0,07 | $SiO_2$ | 14,0 | 0,04 | $SiO_2$ | 83,0 | 0,22 |
| | 30 | $Ta_2O_5$ | 6,5 | 0,02 | $Ta_2O_5$ | 10,5 | 0,04 | $Ta_2O_5$ | 110,0 | 0,41 | $Ta_2O_5$ | 11,0 | 0,04 |
| | σ | | | 0,60 | | | 3,52 | | | 1,62 | | | 2,91 |
| | Rm | | | 6,54 | | | 6,93 | | | 5,20 | | | 17,14 |
| | σ* Rm | | | 3,93 | | | 24,40 | | | 8,43 | | | 49,89 |

Fig. 10

| Group | Layer | Antiref_g MAT | Antiref_g d / nm | Antiref_g FWOT | Antiref_bb MAT | Antiref_bb d / nm | Antiref_bb FWOT | Antiref_uv MAT | Antiref_uv d / nm | Antiref_uv FWOT |
|---|---|---|---|---|---|---|---|---|---|---|
| 28 | 32 | $SiO_2$ | 76,0 | 0,20 | $SiO_2$ | 83,8 | 0,22 | $SiO_2$ | 72,5 | 0,19 |
| 28 | 54 | $Al_2O_3$ | 10,0 | 0,03 | $Al_2O_3$ | 10,0 | 0,03 | $Al_2O_3$ | 10,0 | 0,03 |
| 28 | 30 | $Ta_2O_5$ | 136,0 | 0,50 | $Ta_2O_5$ | 123,1 | 0,45 | $Ta_2O_5$ | 132,9 | 0,49 |
| 26 | 32 | $SiO_2$ | 44,0 | 0,12 | $SiO_2$ | 40,6 | 0,11 | $SiO_2$ | 29,8 | 0,08 |
| 26 | 30 | $Ta_2O_5$ | 29,0 | 0,08 | $Ta_2O_5$ | 35,0 | 0,09 | $Ta_2O_5$ | 26,4 | 0,07 |
| 24 | 32 | $SiO_2$ | 56,0 | 0,15 | $SiO_2$ | 40,6 | 0,11 | $SiO_2$ | 33,2 | 0,09 |
| 24 | 30 | $Ta_2O_5$ | 20,8 | 0,06 | $Ta_2O_5$ | 21,9 | 0,06 | $Ta_2O_5$ | 21,6 | 0,06 |
| 22 | 32 | $SiO_2$ | 14,0 | 0,04 | $SiO_2$ | 4,4 | 0,01 | $SiO_2$ | 13,5 | 0,04 |
| 22 | 30 | $Ta_2O_5$ | 8,0 | 0,02 | $Ta_2O_5$ | 11,5 | 0,03 | $Ta_2O_5$ | 4,0 | 0,01 |
| 20 | 32 | $SiO_2$ | 42,0 | 0,11 | $SiO_2$ | 28,4 | 0,08 | $SiO_2$ | 23,9 | 0,06 |
| 20 | 30 | $Ta_2O_5$ | 15,0 | 0,06 | $Ta_2O_5$ | 21,5 | 0,08 | $Ta_2O_5$ | 15,1 | 0,06 |
| | σ | | | 0,13 | | | 0,18 | | | 0,22 |
| | Rm | | | 0,84 | | | 1,61 | | | 1,24 |
| | σ* Rm | | | 0,11 | | | 0,29 | | | 0,27 |

Fig. 11

| Group | Layer | Antiref_f MAT | Antiref_f d / nm | Antiref_f FWOT | Antiref_r MAT | Antiref_r d / nm | Antiref_r FWOT | Antiref_go MAT | Antiref_go d / nm | Antiref_go FWOT |
|---|---|---|---|---|---|---|---|---|---|---|
| 28 | 32 | $SiO_2$ | 75,5 | 0,20 | $SiO_2$ | 80,3 | 0,21 | $SiO_2$ | 75,5 | 0,20 |
| 28 | 54 | $Al_2O_3$ | 10,0 | 0,03 | $Al_2O_3$ | 10,0 | 0,03 | $Al_2O_3$ | 10,0 | 0,03 |
| 28 | 30 | $Ta_2O_5$ | 134,3 | 0,50 | $Ta_2O_5$ | 145,6 | 0,54 | $Ta_2O_5$ | 142,7 | 0,53 |
| 26 | 32 | $SiO_2$ | 35,0 | 0,09 | $SiO_2$ | 35,7 | 0,10 | $SiO_2$ | 35,0 | 0,09 |
| 26 | 30 | $Ta_2O_5$ | 25,4 | 0,07 | $Ta_2O_5$ | 25,9 | 0,07 | $Ta_2O_5$ | 25,4 | 0,07 |
| 24 | 32 | $SiO_2$ | 60,0 | 0,16 | $SiO_2$ | 61,2 | 0,16 | $SiO_2$ | 60,0 | 0,16 |
| 24 | 30 | $Ta_2O_5$ | 16,1 | 0,04 | $Ta_2O_5$ | 16,5 | 0,04 | $Ta_2O_5$ | 16,1 | 0,04 |
| 22 | 32 | $SiO_2$ | 27,2 | 0,07 | $SiO_2$ | 27,7 | 0,07 | $SiO_2$ | 27,2 | 0,07 |
| 22 | 30 | $Ta_2O_5$ | 5,1 | 0,01 | $Ta_2O_5$ | 8,2 | 0,02 | $Ta_2O_5$ | 5,1 | 0,01 |
| 20 | 32 | $SiO_2$ | 31,8 | 0,09 | $SiO_2$ | 33,2 | 0,09 | $SiO_2$ | 31,9 | 0,09 |
| 20 | 30 | $Ta_2O_5$ | 10,8 | 0,04 | $Ta_2O_5$ | 12,8 | 0,05 | $Ta_2O_5$ | 10,8 | 0,04 |
| | σ | | | 0,14 | | | 0,15 | | | 0,14 |
| | Rm | | | 0,72 | | | 0,80 | | | 0,78 |
| | σ* Rm | | | 0,10 | | | 0,12 | | | 0,11 |

Fig. 12

| | | V_b | | | V_r | | | V_ g | | | V_go | | |
|---|---|---|---|---|---|---|---|---|---|---|---|---|---|
| | | MAT | d / nm | FWOT | MAT | d / nm | FWOT | MAT | d / nm | FWOT | MAT | d / nm | FWOT |
| 28 | 32 | $SiO_2$ | 108,0 | 0,29 | $SiO_2$ | 90,1 | 0,24 | $SiO_2$ | 121,1 | 0,32 | $SiO_2$ | 78,0 | 0,21 |
| | 54 | $Al_2O_3$ | 10,0 | 0,03 | $Al_2O_3$ | 10,0 | 0,03 | $Al_2O_3$ | 10,0 | 0,03 | $Al_2O_3$ | 10,0 | 0,03 |
| | 30 | $Ta_2O_5$ | 192,1 | 0,71 | $Ta_2O_5$ | 35,6 | 0,13 | $Ta_2O_5$ | 95,1 | 0,35 | $Ta_2O_5$ | 30,8 | 0,11 |
| 26 | 32 | $SiO_2$ | 48,9 | 0,13 | $SiO_2$ | 54,5 | 0,15 | $SiO_2$ | 54,4 | 0,15 | $SiO_2$ | 47,2 | 0,13 |
| | 30 | $Ta_2O_5$ | 36,3 | 0,10 | $Ta_2O_5$ | 21,0 | 0,06 | $Ta_2O_5$ | 49,1 | 0,13 | $Ta_2O_5$ | 18,2 | 0,05 |
| 24 | 32 | $SiO_2$ | 85,8 | 0,23 | $SiO_2$ | 202,9 | 0,54 | $SiO_2$ | 145,1 | 0,39 | $SiO_2$ | 175,7 | 0,47 |
| | 30 | $Ta_2O_5$ | 23,1 | 0,06 | $Ta_2O_5$ | 109,6 | 0,29 | $Ta_2O_5$ | 17,3 | 0,05 | $Ta_2O_5$ | 94,9 | 0,25 |
| 22 | 32 | $SiO_2$ | 36,2 | 0,10 | $SiO_2$ | 32,1 | 0,09 | $SiO_2$ | 100,0 | 0,27 | $SiO_2$ | 27,8 | 0,07 |
| | 30 | $Ta_2O_5$ | 7,4 | 0,02 | $Ta_2O_5$ | 14,8 | 0,04 | $Ta_2O_5$ | 18,7 | 0,05 | $Ta_2O_5$ | 12,8 | 0,03 |
| 20 | 32 | $SiO_2$ | 42,4 | 0,11 | $SiO_2$ | 36,5 | 0,10 | $SiO_2$ | 20,0 | 0,05 | $SiO_2$ | 31,6 | 0,08 |
| | 30 | $Ta_2O_5$ | 14,4 | 0,05 | $Ta_2O_5$ | 115,7 | 0,43 | $Ta_2O_5$ | 31,5 | 0,12 | $Ta_2O_5$ | 100,2 | 0,37 |
| | σ | | | 0,14 | | | 2,34 | | | 0,99 | | | 2,35 |
| | Rm | | | 7,76 | | | 8,79 | | | 15,29 | | | 11,55 |
| | σ* Rm | | | 1,06 | | | 20,58 | | | 15,10 | | | 27,15 |

Fig. 13

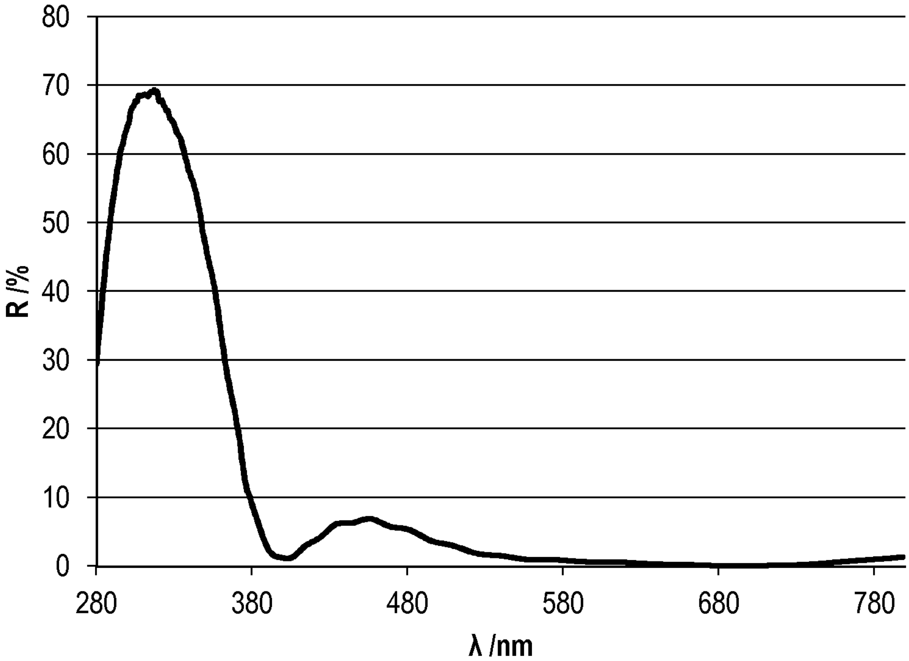
R /%
80
70
60
50
40
30
20
10
0
280
380
480
580
680
780
λ /nm

Fig. 14

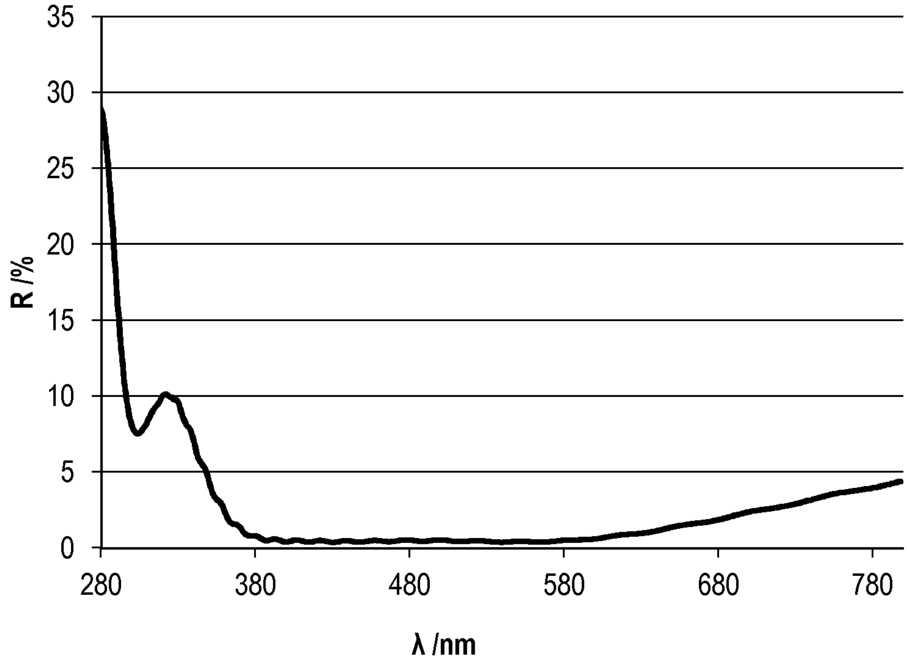
R /%
35
30
25
20
15
10
5
0
280
380
480
580
680
780
λ /nm

Fig. 15

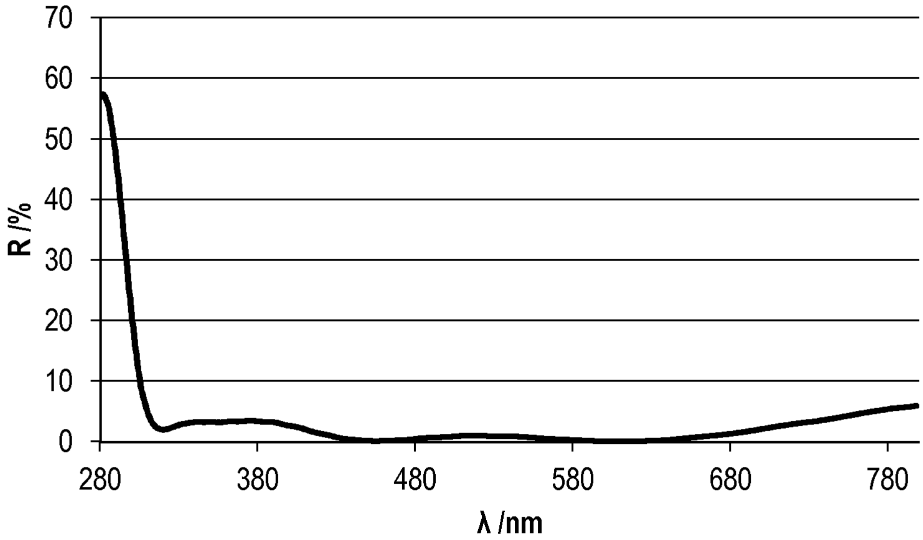
70
60
50
40
30
20
10
0
R /%
280
380
480
580
680
780
λ /nm

Fig. 16

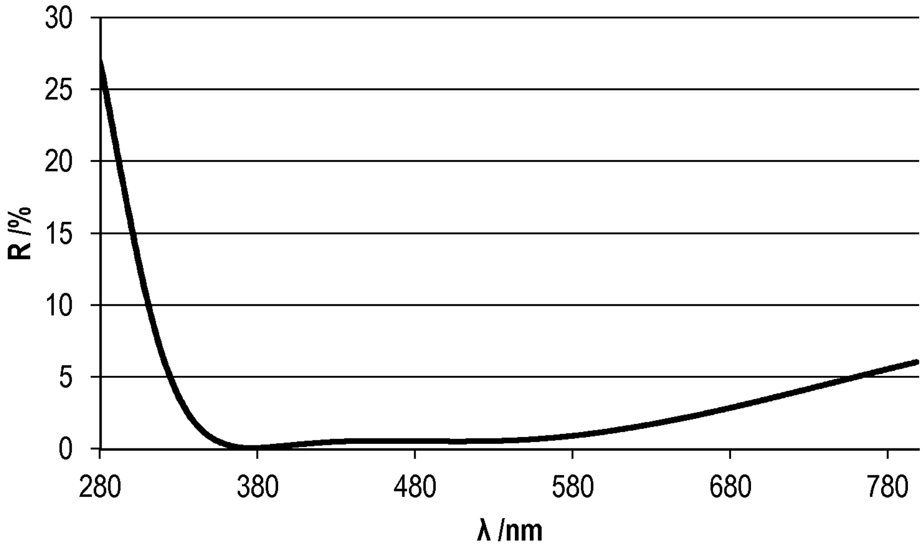
30
25
20
15
10
5
0
R /%
280
380
480
580
680
780
λ /nm

Fig. 17

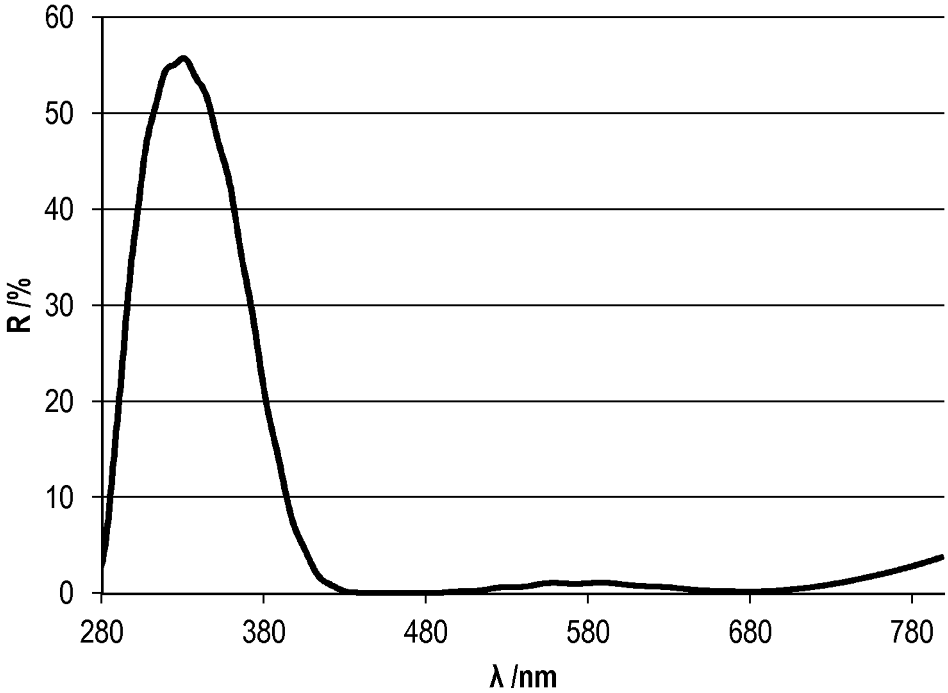


Fig. 18

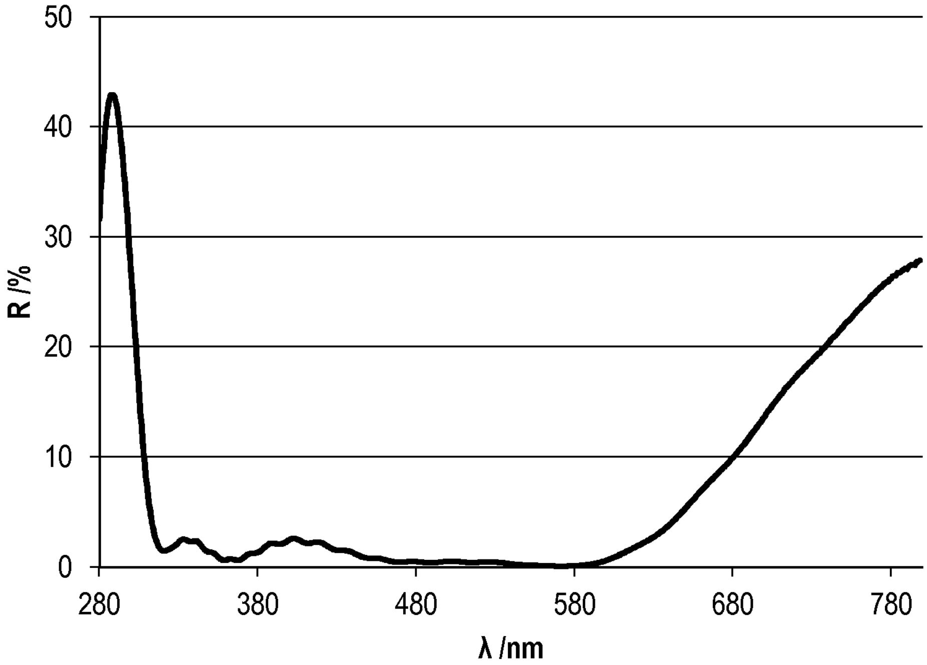
50
40
30
20
10
0
R /%
280
380
480
580
680
780
λ /nm

Fig. 19

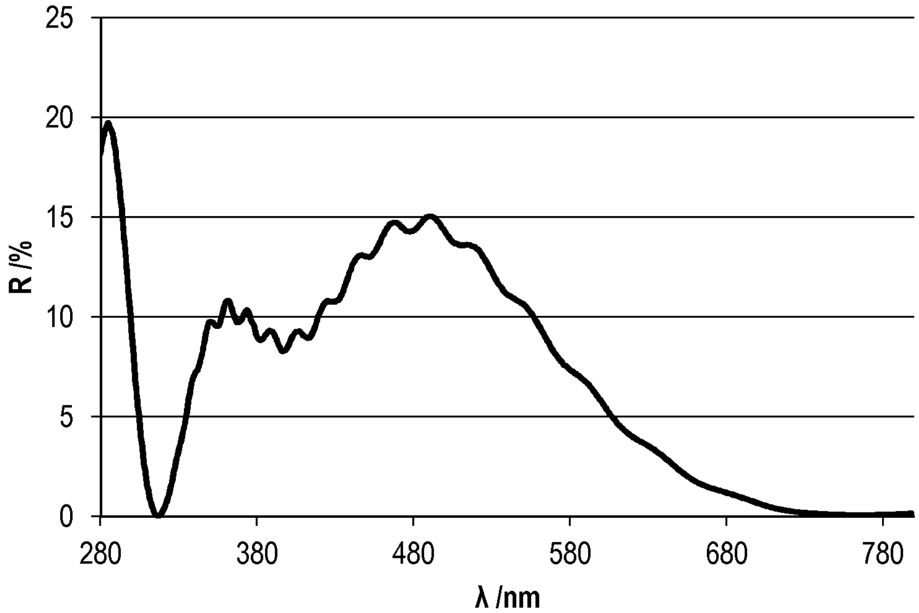
25
20
15
10
5
0
R /%
280
380
480
580
680
780
λ /nm

Fig. 20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013171435 A1
- DE 10101017 A1